# EUROPEAN PATENT APPLICATION

(11) **EP 4 822 418 A2**
(43) Date of publication of application: **14.10.2026**
(21) Application number: 26196855.6
(22) Date of filing: 05.08.2026
(51) Int. Cl.: G02B 13/00, G02B 9/64

(54) **OPTICAL LENS, CAMERA MODULE, AND ELECTRONIC DEVICE**

(30) Priority: 06.08.2025 CN 202511100393
(71) Applicant: Jiangxi OFILM Optical Co., Ltd., Nanchang, Jiangxi 330096 (CN)
(72) Inventor: WANG, Guogui, Nanchang, 330096 (CN)
(74) Representative: Metida

(57) **Abstract**

An optical lens (100), from an object side to an image side along an optical axis (O1), sequentially includes a first lens (L1), a second lens (L2), a third lens (L3), a fourth lens (L4), a fifth lens (L5), a sixth lens (L6) and a seventh lens (L7). Each of the first lens (L1), the second lens (L2), a fourth lens (L4), and a fifth lens (L5) have positive refractive power, each of the third lens (L3), and the seventh lens (L7) has negative refractive power, the sixth lens (L6) having refractive power. Object side surfaces of the first, second, fifth, sixth and seventh lens (L7) are convex in a paraxial region thereof, image side surfaces of the first, fifth, sixth and seventh lens (L7) are concave in a paraxial region thereof. The optical lens (100) satisfies: 0.95<TTL/ImgH<1.1.

## Description

### FIELD

The present disclosure relates to field of imaging, and in particular to an optical lens, a camera module, and an electronic device.

### BACKGROUND

With the rapid development of optical imaging technology, users' requirements for the imaging quality of electronic devices have increased significantly. In recent years, five-element optical lenses remain the mainstream configuration for electronic devices. However, the imaging quality of the five-element optical lenses can hardly meet the users' demand for high-quality imaging. On the other hand, by increasing the number of lenses, seven-element optical lenses can significantly enhance optical resolving power, thereby improving imaging resolution and clarity to meet the users' demand for high-quality imaging. Nevertheless, the increased number of lenses also leads to an increase in the total length and volume of an optical lens, which contradicts the development trend of thinner and lighter electronic devices.

### SUMMARY

Therefore, an optical lens, a camera module, and an electronic device are needed, which may improve the imaging quality while meeting the requirements of miniaturization design.

In a first aspect, the present disclosure provides an optical lens with seven lenses having refractive power. The optical lens includes, from an object side to an image side along an optical axis: a first lens having positive refractive power, a second lens having positive refractive power, a third lens having negative refractive power, a fourth lens having positive refractive power, a fifth lens having positive refractive power, a sixth lens having refractive power, and a seventh lens having negative refractive power. An object side surface of the first lens is convex in a paraxial region thereof, and an image side surface of the first lens is concave in a paraxial region thereof. An object side surface of the second lens is convex in a paraxial region thereof, and an image side surface of the second lens is convex in a paraxial region thereof. An object side surface of the third lens is concave in a paraxial region thereof. An object side surface of the fourth lens is concave in a paraxial region thereof, and an image side surface of the fourth lens is convex in a paraxial region thereof. An object side surface of the fifth lens is convex in a paraxial region thereof, and an image side surface of the fifth lens is concave in a paraxial region thereof. An object side surface of the sixth lens is convex in a paraxial region thereof, and an image side surface of the sixth lens is concave in a paraxial region thereof. An object side surface of the seventh lens is convex in a paraxial region thereof, and an image side surface of the seventh lens is concave in a paraxial region thereof. The optical lens satisfies the following conditional expression: 0.95<TTL/ImgH<1.1; wherein TTL is a distance from the object side surface of the first lens to an imaging plane of the optical lens along the optical axis, and ImgH is half of an image height corresponding to the maximum field of view angle of the optical lens.

In the optical lens described above, the first lens has positive refractive power, with the object side surface being convex in a paraxial region thereof and the image side surface being concave in a paraxial region thereof, which is conducive to the convergence of incident light. The second lens has positive refractive power, with the object side surface being convex in a paraxial region thereof and the image side surface being convex in a paraxial region thereof. The second lens cooperates with the first lens to correct spherical aberration produced by the previous group of lenses. The third lens has negative refractive power, with the object side surface being concave in a paraxial region thereof, which helps to reduce an angle of chief rays coming from the front lens group. The fourth lens has positive refractive power, with the object side surface being concave in a paraxial region thereof and the image side surface being convex in a paraxial region thereof. The fourth lens cooperates with the third lens to correct astigmatism produced by the previous group of lenses. The fifth lens has positive refractive power, with the object side surface being convex in a paraxial region thereof and the image side surface being concave in a paraxial region thereof. The fifth lens cooperates with the fourth lens to correct spherical aberration, astigmatism, field curvature, and distortion produced by the previous group of lenses. The sixth lens has refractive power, with the object side surface being convex in a paraxial region thereof and the image side surface being concave in a paraxial region thereof. The sixth lens cooperates with the fifth lens to correct coma produced by the previous group of lenses. The seventh lens has negative refractive power, with the object side surface being convex in a paraxial region thereof and the image side surface being concave in a paraxial region thereof, which is beneficial for correcting field curvature produced by the optical lens, thereby improving the imaging quality of the optical lens and reducing the manufacturing difficulty of each lens in the optical lens.

Furthermore, by arranging the optical lens to satisfy 0.95<TTL/ImgH<1.1, the range of TTL/ImgH is reasonably configured, which is beneficial for enabling the optical lens to be adapted to a high-pixel image sensor, improving the resolution of the optical lens, and providing an advantage when capturing objects at a medium telephoto object distance. Moreover, by limiting the TTL/ImgH ratio within this range, an optical total length of the optical lens is reduced, making the optical lens have an ultra-thin characteristic, which is conducive to realizing a miniaturized design of the optical lens.

In a second aspect, the present disclosure provides a camera module including the optical lens as described above; and an image sensor, disposed on the image side of the optical lens. The camera module incorporating the optical lens as described above may improve the imaging quality while meeting the requirements of miniaturization design.

In a third aspect, the present disclosure also provides an electronic device including a housing; and the camera module as described above, the camera module being disposed in the housing. The electronic device incorporating the optical lens as described above may improve the imaging quality while meeting the requirements of miniaturization design.

### BRIEF DESCRIPTION OF THE DRAWINGS

FIG. 1 is a schematic structure diagram of an optical lens according to a first embodiment of the present disclosure.
FIG. 2 shows a longitudinal spherical aberration diagram, an astigmatism curve diagram, and a distortion diagram of the optical lens of FIG. 1.
FIG. 3 is a schematic structure diagram of an optical lens according to a second embodiment of the present disclosure.
FIG. 4 shows a longitudinal spherical aberration diagram, an astigmatism curve diagram, and a distortion diagram of the optical lens of FIG. 3.
FIG. 5 is a schematic structure diagram of an optical lens according to a third embodiment of the present disclosure.
FIG. 6 shows a longitudinal spherical aberration diagram, an astigmatism curve diagram, and a distortion diagram of the optical lens of FIG. 5.
FIG. 7 is a schematic structure diagram of an optical lens according to a fourth embodiment of the present disclosure.
FIG. 8 shows a longitudinal spherical aberration diagram, an astigmatism curve diagram, and a distortion diagram of the optical lens of FIG. 7.
FIG. 9 is a schematic structure diagram of an optical lens according to a fifth embodiment of the present disclosure.
FIG. 10 shows a longitudinal spherical aberration diagram, an astigmatism curve diagram, and a distortion diagram of the optical lens of FIG. 9.
FIG. 11 is a schematic structure diagram of an optical lens according to a sixth embodiment of the present disclosure.
FIG. 12 shows a longitudinal spherical aberration diagram, an astigmatism curve diagram, and a distortion diagram of the optical lens of FIG. 11.
FIG. 13 is a schematic structure diagram of an optical lens according to a seventh embodiment of the present disclosure.
FIG. 14 shows a longitudinal spherical aberration diagram, an astigmatism curve diagram, and a distortion diagram of the optical lens of FIG. 13.
FIG. 15 is a schematic structure diagram of an optical lens according to an eighth embodiment of the present disclosure.
FIG. 16 shows a longitudinal spherical aberration diagram, an astigmatism curve diagram, and a distortion diagram of the optical lens of FIG. 15.
FIG. 17 is a schematic structure diagram of an optical lens according to a ninth embodiment of the present disclosure.
FIG. 18 shows a longitudinal spherical aberration diagram, an astigmatism curve diagram, and a distortion diagram of the optical lens of FIG. 17.
FIG. 19 is a schematic structure diagram of an optical lens according to a tenth embodiment of the present disclosure.
FIG. 20 shows a longitudinal spherical aberration diagram, an astigmatism curve diagram, and a distortion diagram of the optical lens of FIG. 19.
FIG. 21 is a schematic structural diagram of a camera module of an embodiment of the present disclosure.
FIG. 22 is a schematic structural diagram of an electronic device of an embodiment of the present disclosure.

### DETAILED DESCRIPTION

The following provides a detailed description of embodiments of the present disclosure with reference to the accompanying drawings, where the same or similar numerals throughout the drawings represent the same or similar elements or elements with the same or similar functions. The embodiments described below with reference to the accompanying drawings are exemplary to explain the present disclosure, but not to limit the scope of the present disclosure.

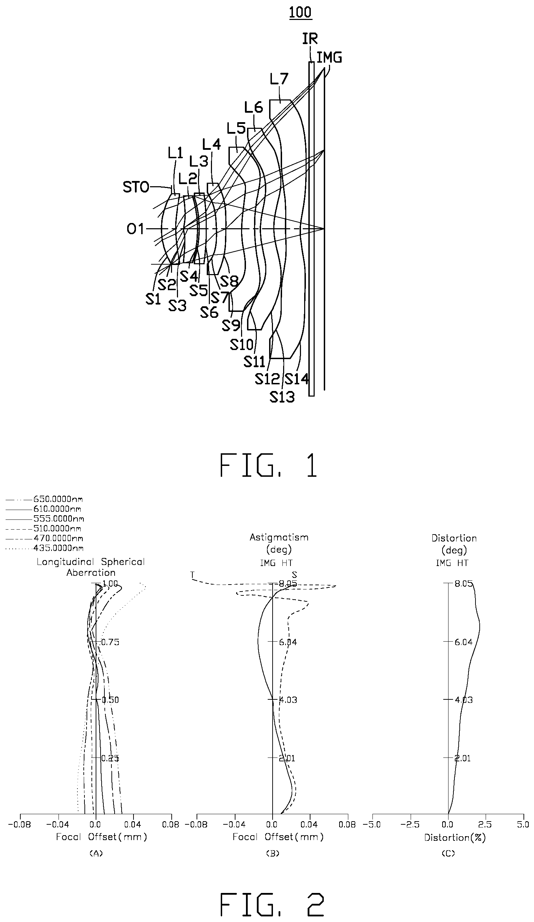

Referring to FIG. 1, an embodiment of the present disclosure provides an optical lens 100 including seven lenses with refractive power. From an object side to an image side along an optical axis O1 of the optical lens 100, the seven lenses sequentially include a first lens L1, a second lens L2, a third lens L3, a fourth lens L4, a fifth lens L5, a sixth lens L6, and a seventh lens L7. When imaging, light enters the first lens L1, the second lens L2, the third lens L3, the fourth lens L4, the fifth lens L5, the sixth lens L6, and the seventh lens L7 sequentially from the object side of the first lens L1, and finally forms an image on an imaging plane IMG of the optical lens 100.

The first lens L1 has positive refractive power. An object side surface S1 of the first lens L1 is convex in a paraxial region thereof, and an image side surface S2 of the first lens L1 is concave in a paraxial region thereof. The second lens L2 has positive refractive power. An object side surface S3 of the second lens L2 is convex in a paraxial region thereof, and an image side surface S4 of the second lens L2 is convex in a paraxial region thereof. The third lens L3 has negative refractive power. An object side surface S5 of the third lens L3 is concave in a paraxial region thereof. The fourth lens L4 has positive refractive power. An object side surface S7 of the fourth lens L4 is concave in a paraxial region thereof, and an image side surface S8 of the fourth lens L4 is convex in a paraxial region thereof. The fifth lens L5 has positive refractive power. An object side surface S9 of the fifth lens L5 is convex in a paraxial region thereof, and an image side surface S10 of the fifth lens L5 is concave in a paraxial region thereof. The sixth lens L6 has refractive power. An object side surface S11 of the sixth lens L6 is convex in a paraxial region thereof, and an image side surface S12 of the sixth lens L6 is concave in a paraxial region thereof. The seventh lens L7 has negative refractive power. An object side surface S13 of the seventh lens L7 is convex in a paraxial region thereof, and an image side surface S14 of the seventh lens L7 is concave in a paraxial region thereof.

In the optical lens 100 described above, the first lens L1 having positive refractive power is arranged, with the object side surface S1 being convex in a paraxial region thereof and the image side surface S2 being concave in a paraxial region thereof, which is conducive to the convergence of incident light. The second lens L2 having positive refractive power is arranged, with the object side surface S3 being convex in a paraxial region thereof and the image side surface S4 being convex in a paraxial region thereof. The second lens L2 cooperates with the first lens L1 to correct spherical aberration generated by the optical lens 100. The third lens L3 having negative refractive power is arranged, with the object side surface S5 being concave in a paraxial region thereof, which helps to reduce an angle of chief rays coming from the front lens group. The fourth lens L4 having positive refractive power is arranged, with the object side surface S7 being concave in a paraxial region thereof and the image side surface S8 being convex in a paraxial region thereof. The fourth lens L4 cooperates with the third lens L3 to correct astigmatism generated by the optical lens 100. The fifth lens L5 having positive refractive power is arranged, with the object side surface S9 being convex in a paraxial region thereof and the image side surface S10 being concave in a paraxial region thereof. The fifth lens L5 cooperates with the fourth lens L4 to correct spherical aberration, astigmatism, field curvature, and distortion generated by the optical lens 100. The sixth lens L6 having refractive power is arranged, with the object side surface S11 being convex in a paraxial region thereof and the image side surface S12 being concave in a paraxial region thereof. The sixth lens L6 cooperates with the fifth lens L5 to correct coma generated by the optical lens 100. The seventh lens L7 having negative refractive power is arranged, with the object side surface S13 being convex in a paraxial region thereof and the image side surface S14 being concave in a paraxial region thereof, which is beneficial for correcting field curvature generated by the optical lens 100, thereby improving the imaging quality of the optical lens 100 and reducing the manufacturing difficulty of each lens in the optical lens 100.

Furthermore, the optical lens 100 satisfies the following relationship: 0.95<TTL/ImgH<1.1. For example, the value of TTL/ImgH may be equal to 0.951, 0.96, 0.97, 0.98, 0.99, 1.0, 1.01, 1.02, 1.03, 1.04, 1.05, 1.06, 1.07, 1.08, 1.09, 1.099, etc. More preferably, 0.98<TTL/ImgH<1.05. Wherein, TTL is a distance from the object side surface S1 of the first lens L1 to the imaging plane of the optical lens 100 along the optical axis O1, and ImgH is half of an image height corresponding to the maximum field of view angle of the optical lens 100. By arranging the optical lens 100 to satisfy the above relationship, the range of TTL/ImgH is reasonably configured, which is beneficial for enabling the optical lens 100 to be adapted to a high-pixel image sensor, improving the resolution of the optical lens 100, and providing an advantage when capturing objects at a medium telephoto object distance. Moreover, by limiting the TTL/ImgH ratio within this range, the optical total length of the optical lens 100 is reduced, making the optical lens 100 have an ultra-thin characteristic, which is conducive to realizing a miniaturized design of the optical lens 100.

In some embodiments, when the optical lens 100 is applied to electronic devices such as smart phones and smart tablets, the first lens L1, the second lens L2, the third lens L3, the fourth lens L4, the fifth lens L5, the sixth lens L6, and the seventh lens L7 may be made of plastic to reduce the overall weight of the optical lens 100. In addition, it can be understood that when the optical lens 100 is applied to electronic devices such as vehicle-mounted devices and driving recorders, the first lens L1, the second lens L2, the third lens L3, the fourth lens L4, the fifth lens L5, the sixth lens L6, and the seventh lens L7 may all be made of glass, so that the optical lens 100 has good optical effects while reducing the influence of temperature on the above lenses. Of course, among the multiple lenses of the optical lens 100, some lenses may be made of glass and some lenses may be made of plastic, so as to reduce the manufacturing cost of the lenses and the weight of the lenses while ensuring a reduction in the influence of temperature on the lenses to achieve good imaging effects, thereby reducing the manufacturing cost of the optical lens 100 and reducing the overall weight of the optical lens 100.

In some embodiments, considering that spherical lenses have the characteristics of simple manufacturing process and low production cost, and can facilitate flexible design of the surface shape of the lenses to improve the imaging resolution capability of the optical lens 100. Aspherical lenses can enable the object side surface or the image side surface of the lens to have a more flexible design, so that the lenses can well solve the adverse phenomena such as unclear imaging, distorted field of view, or narrow field of view when the size is small and thin, and the optical lens 100 can have good imaging quality while meeting the requirements of miniaturization design, which is conducive to shortening the length of the optical lens 100. Based on this, the first lens L1, the second lens L2, the third lens L3, the fourth lens L4, the fifth lens L5, the sixth lens L6, and the seventh lens L7 may be aspherical lenses. Thus, through the aspherical design, not only can the processability of each lens be improved, which is beneficial for surface shape design, but also the object side surface or the image side surface of the lens can have a more flexible design, so that each lens can well solve the adverse phenomena such as unclear imaging, distorted field of view, or narrow field of view when the size is small and thin, and the optical lens 100 can have good imaging quality and high resolution without arranging too many lenses, while being conducive to shortening the length of the optical lens 100. It can be understood that in other embodiments, the surfaces of each lens in the optical lens 100 may all be spherical, all be aspherical, or any combination of spherical and aspherical surfaces, which can be selected according to actual needs, and thus no specific limitation is made in this embodiment.

In some embodiments, the optical lens 100 further includes a stop STO. The stop STO may be an aperture stop and/or a field stop. For example, the stop STO may be an aperture stop, or the stop STO may be a field stop, or the stop STO may be a combination of the aperture stop and the field stop. In the present embodiment, the stop STO is disposed at the object side surface S1 of the first lens L1. It can be understood that, in other embodiments, the stop STO may also be disposed between other lenses, and the arrangement may be adjusted according to actual conditions, which is not specifically limited in this embodiment.

In some embodiments, the optical lens 100 further includes an infrared filter IR. The infrared filter IR is disposed between the image side surface S14 of the seventh lens L7 and the imaging plane IMG of the optical lens 100. Optionally, the infrared filter IR may be an infrared cut-off filter to filter out infrared light and allow visible light to pass through, so that the imaging better conforms to the visual experience of the human eye, thereby improving imaging quality. In other embodiments, the infrared filter IR may be an infrared bandpass filter, which can filter out light of other bands such as visible light, allow infrared light to pass through, and reflect visible light, so as to realize infrared imaging of the optical lens 100, enabling the optical lens 100 to image in dark light environments or special disclosure scenarios and obtain good imaging quality. It can be understood that the infrared filter IR may be made of plastic or optical glass with a coating, or may be an infrared filter of other materials, which can be selected according to actual needs, and no specific limitation is made in this embodiment.

In some embodiments, the optical lens 100 further satisfies the following relationship: 1.3<f1/f<1.5. For example, the value of f1/f may be equal to 1.301, 1.31, 1.32, 1.33, 1.34, 1.35, 1.36, 1.37, 1.38, 1.39, 1.4, 1.41, 1.42, 1.43, 1.44, 1.45, 1.46, 1.47, 1.48, 1.49, 1.499, etc. Wherein, f is an effective focal length of the optical lens 100, and f1 is an effective focal length of the first lens L1. By arranging the optical lens 100 to satisfy the above relationship, the ratio of the effective focal length of the first lens L1 to the effective focal length of the optical lens 100 is controlled within a certain range, so that the refractive power of the first lens L1 is not too strong, which can correct high-order spherical aberration and enable the optical lens 100 to have good imaging quality.

In some embodiments, the optical lens 100 further satisfies the following relationship: 1.4<f2/f<1.7. For example, the value of f2/f may be equal to 1.401, 1.41, 1.42, 1.43, 1.44, 1.45, 1.46, 1.47, 1.48, 1.49, 1.5, 1.51, 1.52, 1.53, 1.54, 1.55, 1.56, 1.57, 1.58, 1.59, 1.6, 1.61, 1.62, 1.63, 1.64, 1.65, 1.66, 1.67, 1.68, 1.69, 1.699, etc. Wherein, f2 is an effective focal length of the second lens L2. By arranging the optical lens 100 to satisfy the above relationship, the ratio of the effective focal length of the second lens L2 to the effective focal length of the optical lens 100 is controlled within a certain range, so that the refractive power of the second lens L2 is not too strong, which can correct high-order spherical aberration and enable the optical lens 100 to have good imaging quality.

In some embodiments, the optical lens 100 further satisfies the following relationship: -3.9<f3/f<-2.6. For example, the value of f3/f may be equal to -3.89, -3.8, -3.7, -3.6, -3.5, -3.4, -3.3, -3.2, -3.1, -3, -2.9, -2.8, -2.7, -2.61, etc. Wherein, f3 is an effective focal length of the third lens L3. By arranging the optical lens 100 to satisfy the above relationship, the ratio of the effective focal length of the third lens L3 to the effective focal length of the optical lens 100 is controlled within a certain range, so that the refractive power of the third lens L3 is not too strong, which can correct high-order spherical aberration and enable the optical lens 100 to have good imaging quality.

In some embodiments, the optical lens 100 further satisfies the following relationship: 20<|f4|/f. For example, the value of |f4|/f may be equal to 20.1, 21, 22, 23, 24, 25, 30, 40, 50, etc. Wherein, f4 is an effective focal length of the fourth lens L4. By arranging the optical lens 100 to satisfy the above relationship, the ratio of the effective focal length of the fourth lens L4 to the effective focal length of the optical lens 100 is controlled within a certain range, so that the refractive power of the fourth lens L4 is not too strong, which can correct high-order spherical aberration and enable the optical lens 100 to have good imaging quality.

In some embodiments, the optical lens 100 further satisfies the following relationship: 6<f5/f<7.5. For example, the value of f5/f may be equal to 6.01, 6.1, 6.2, 6.3, 6.4, 6.5, 6.6, 6.7, 6.8, 6.9, 7, 7.1, 7.2, 7.3, 7.4, 7.49, etc. Wherein, f5 is an effective focal length of the fifth lens L5. By arranging the optical lens 100 to satisfy the above relationship, the ratio of the effective focal length of the fifth lens L5 to the effective focal length of the optical lens 100 is controlled within a certain range, so that the refractive power of the fifth lens L5 is not too strong, which can correct high-order spherical aberration and enable the optical lens 100 to have good imaging quality.

In some embodiments, the optical lens 100 further satisfies the following relationship: 5<|f6|/f. For example, the value of |f6|/f may be equal to 5.01, 5.1, 5.2, 5.3, 5.4, 5.5, 6, 7, 8, 9, 10, etc. Wherein, f6 is an effective focal length of the sixth lens L6. By arranging the optical lens 100 to satisfy the above relationship, the ratio of the effective focal length of the sixth lens L6 to the effective focal length of the optical lens 100 is controlled within a certain range, so that the refractive power of the sixth lens L6 is not too strong, which can correct high-order spherical aberration and enable the optical lens 100 to have good imaging quality.

In some embodiments, the optical lens 100 further satisfies the following relationship: -1.3<f7/f<-0.9. For example, the value of f7/f may be equal to -1.29, -1.2, -1.1, -1, -0.91, etc. Wherein, f7 is an effective focal length of the seventh lens L7. By arranging the optical lens 100 to satisfy the above relationship, the ratio of the effective focal length of the seventh lens L7 to the effective focal length of the optical lens 100 is controlled within a certain range, so that the refractive power of the seventh lens L7 is not too strong, which can correct high-order spherical aberration and enable the optical lens 100 to have good imaging quality.

In some embodiments, the optical lens 100 further satisfies the following relationship: 2.3<f/R1<2.5. For example, the value of f/R1 may be equal to 2.301, 2.31, 2.32, 2.33, 2.34, 2.35, 2.36, 2.37, 2.38, 2.39, 2.4, 2.41, 2.42, 2.43, 2.44, 2.45, 2.46, 2.47, 2.48, 2.49, 2.499, etc. Wherein, R1 is a radius of curvature of the object side surface S1 of the first lens L1 at the optical axis O1. By arranging the optical lens 100 to satisfy the above relationship, the ratio of the effective focal length of the optical lens 100 to the radius of curvature of the object side surface S1 of the first lens L1 at the optical axis O1 is controlled within a certain range, so that the astigmatism of the first lens L1 can be kept within a reasonable range, thereby enabling the optical lens 100 to have good imaging quality.

In some embodiments, the optical lens 100 further satisfies the following relationship: 1.1<f/R2<1.3. For example, the value of f/R2 may be equal to 1.101, 1.11, 1.12, 1.13, 1.14, 1.15, 1.16, 1.17, 1.18, 1.19, 1.2, 1.21, 1.22, 1.23, 1.24, 1.25, 1.26, 1.27, 1.28, 1.29, 1.299, etc. Wherein, R2 is a radius of curvature of the image side surface S2 of the first lens L1 at the optical axis O1. By arranging the optical lens 100 to satisfy the above relationship, the ratio of the effective focal length of the optical lens 100 to the radius of curvature of the image side surface S2 of the first lens L1 at the optical axis O1 is controlled within a certain range, so that the astigmatism of the first lens L1 can be kept within a reasonable range, and the astigmatism generated by the front lenses can be effectively balanced, thereby enabling the optical lens 100 to have good imaging quality.

In some embodiments, the optical lens 100 further satisfies the following relationship: 2.6<R3/f<3.1. For example, the value of R3/f may be equal to 2.601, 2.61, 2.62, 2.63, 2.64, 2.65, 2.66, 2.67, 2.68, 2.69, 2.7, 2.72, 2.74, 2.76, 2.78, 2.8, 2.81, 2.83, 2.85, 2.87, 2.89, 2.9, 2.91, 2.93, 2.95, 2.97, 2.99, 3.0, 3.01, 3.03, 3.05, 3.07, 3.09, 3.099, etc. Wherein, R3 is a radius of curvature of the object side surface S3 of the second lens L2 at the optical axis O1. By arranging the optical lens 100 to satisfy the above relationship, the ratio of the radius of curvature of the object side surface S3 of the second lens L2 at the optical axis O1 to the effective focal length of the optical lens 100 is controlled within a certain range, so that the astigmatism of the second lens L2 can be kept within a reasonable range, and the astigmatism generated by the front lenses can be effectively balanced, thereby enabling the optical lens 100 to have good imaging quality.

In some embodiments, the optical lens 100 further satisfies the following relationship: -1.4<R4/f<-1.1. For example, the value of R4/f may be equal to -1.399, -1.39, -1.37, -1.35, -1.33, -1.31, -1.3, -1.28, -1.26, -1.24, -1.22, -1.2, - 1.19, -1.17, -1.16, -1.14, -1.12, -1.11, -1.101, etc. Wherein, R4 is a radius of curvature of the image side surface S4 of the second lens L2 at the optical axis O1. By arranging the optical lens 100 to satisfy the above relationship, the ratio of the radius of curvature of the image side surface S4 of the second lens L2 at the optical axis O1 to the effective focal length of the optical lens 100 is controlled within a certain range, so that the astigmatism of the second lens L2 can be kept within a reasonable range, and the astigmatism generated by the front lenses can be effectively balanced, thereby enabling the optical lens 100 to have good imaging quality.

In some embodiments, the optical lens 100 further satisfies the following relationship: -2.3<R5/f<-1.2. For example, the value of R5/f may be equal to -2.29, -2.2, -2.1, -2.0, -1.9, -1.8, -1.7, -1.6, -1.5, -1.4, -1.3, -1.21, etc. Wherein, R5 is a radius of curvature of the object side surface S5 of the third lens L3 at the optical axis O1. By arranging the optical lens 100 to satisfy the above relationship, the ratio of the radius of curvature of the object side surface S5 of the third lens L3 at the optical axis O1 to the effective focal length of the optical lens 100 is controlled within a certain range, so that the astigmatism of the third lens L3 can be kept within a reasonable range, and the astigmatism generated by the front lenses can be effectively balanced, thereby enabling the optical lens 100 to have good imaging quality.

In some embodiments, the optical lens 100 further satisfies the following relationship: 4<|R6|/f. For example, the value of |R6|/f may be equal to 4.01, 6, 8, 10, 20, 30, 40, 50, etc. Wherein, R6 is a radius of curvature of the image side surface S6 of the third lens L3 at the optical axis O1. By arranging the optical lens 100 to satisfy the above relationship, the ratio of the absolute value of the radius of curvature of the image side surface S6 of the third lens L3 at the optical axis O1 to the effective focal length of the optical lens 100 is controlled within a certain range, so that the astigmatism of the third lens L3 can be kept within a reasonable range, and the astigmatism generated by the front lenses can be effectively balanced, thereby enabling the optical lens 100 to have good imaging quality.

In some embodiments, the optical lens 100 further satisfies the following relationship: -2.8<R7/f<-1.5. For example, the value of R7/f may be equal to -2.79, -2.7, -2.6, -2.5, -2.4, -2.3, -2.2, -2.1, -2.0, -1.9, -1.8, -1.7, -1.6, -1.51, etc. Wherein, R7 is a radius of curvature of the object side surface S7 of the fourth lens L4 at the optical axis O1. By arranging the optical lens 100 to satisfy the above relationship, the ratio of the radius of curvature of the object side surface S7 of the fourth lens L4 at the optical axis O1 to the effective focal length of the optical lens 100 is controlled within a certain range, so that the astigmatism of the fourth lens L4 can be kept within a reasonable range, and the astigmatism generated by the front lenses can be effectively balanced, thereby enabling the optical lens 100 to have good imaging quality.

In some embodiments, the optical lens 100 further satisfies the following relationship: -2.7<R8/f<-1.4. For example, the value of R8/f may be equal to -2.69, -2.6, -2.5, -2.4, -2.3, -2.2, -2.1, -2.0, -1.9, -1.8, -1.7, -1.6, -1.5, -1.41, etc. Wherein, R8 is a radius of curvature of the image side surface S8 of the fourth lens L4 at the optical axis O1. By arranging the optical lens 100 to satisfy the above relationship, the ratio of the radius of curvature of the image side surface S8 of the fourth lens L4 at the optical axis O1 to the effective focal length of the optical lens 100 is controlled within a certain range, so that the astigmatism of the fourth lens L4 can be kept within a reasonable range, and the astigmatism generated by the front lenses can be effectively balanced, thereby enabling the optical lens 100 to have good imaging quality.

In some embodiments, the optical lens 100 further satisfies the following relationship: 1.7<R9/f<2.2. For example, the value of R9/f may be equal to 1.71, 1.72, 1.73, 1.74, 1.75, 1.76, 1.77, 1.78, 1.79, 1.8, 1.81, 1.83, 1.85, 1.87, 1.89, 1.9, 1.92, 1.94, 1.96, 1.98, 2.0, 2.01, 2.03, 2.05, 2.07, 2.09, 2.1, 2.11, 2.13, 2.15, 2.17, 2.19, etc. Wherein, R9 is a radius of curvature of the object side surface S9 of the fifth lens L5 at the optical axis O1. By arranging the optical lens 100 to satisfy the above relationship, the ratio of the radius of curvature of the object side surface S9 of the fifth lens L5 at the optical axis O1 to the effective focal length of the optical lens 100 is controlled within a certain range, so that the astigmatism of the fifth lens L5 can be kept within a reasonable range, and the astigmatism generated by the front lenses can be effectively balanced, thereby enabling the optical lens 100 to have good imaging quality.

In some embodiments, the optical lens 100 further satisfies the following relationship: 3.5<R10/f<4.6. For example, the value of R10/f may be equal to 3.51, 3.6, 3.7, 3.8, 3.9, 4.0, 4.1, 4.2, 4.3, 4.4, 4.5, 4.59, etc. Wherein, R10 is a radius of curvature of the image side surface S10 of the fifth lens L5 at the optical axis O1. By arranging the optical lens 100 to satisfy the above relationship, the ratio of the radius of curvature of the image side surface S10 of the fifth lens L5 at the optical axis O1 to the effective focal length of the optical lens 100 is controlled within a certain range, so that the astigmatism of the fifth lens L5 can be kept within a reasonable range, and the astigmatism generated by the front lenses can be effectively balanced, thereby enabling the optical lens 100 to have good imaging quality.

In some embodiments, the optical lens 100 further satisfies the following relationship: 0.9<f/R11<1.4. For example, the value of f/R11 may be equal to 0.91, 0.93, 0.95, 0.97, 0.99, 1.0, 1.01, 1.03, 1.05, 1.07, 1.09, 1.1, 1.12, 1.14, 1.16, 1.18, 1.2, 1.21, 1.23, 1.25, 1.27, 1.29, 1.3, 1.32, 1.34, 1.36, 1.38, 1.39, etc. Wherein, R11 is a radius of curvature of the object side surface S11 of the sixth lens L6 at the optical axis O1. By arranging the optical lens 100 to satisfy the above relationship, the ratio of the effective focal length of the optical lens 100 to the radius of curvature of the object side surface S11 of the sixth lens L6 at the optical axis O1 is controlled within a certain range, so that the astigmatism of the sixth lens L6 can be kept within a reasonable range, and the astigmatism generated by the front lenses can be effectively balanced, thereby enabling the optical lens 100 to have good imaging quality.

In some embodiments, the optical lens 100 further satisfies the following relationship: 0.6<R12/f<1.3. For example, the value of R12/f may be equal to 0.61, 0.7, 0.8, 0.9, 1.0, 1.1, 1.2, 1.29, etc. Wherein, R12 is a radius of curvature of the image side surface S12 of the sixth lens L6 at the optical axis O1. By arranging the optical lens 100 to satisfy the above relationship, the ratio of the radius of curvature of the image side surface S12 of the sixth lens L6 at the optical axis O1 to the effective focal length of the optical lens 100 is controlled within a certain range, so that the astigmatism of the sixth lens L6 can be kept within a reasonable range, and the astigmatism generated by the front lenses can be effectively balanced, thereby enabling the optical lens 100 to have good imaging quality.

In some embodiments, the optical lens 100 further satisfies the following relationship: 0.7<R13/f<1.4. For example, the value of R13/f may be equal to 0.71, 0.8, 0.9, 1.0, 1.1, 1.2, 1.3, 1.39, etc. Wherein, R13 is a radius of curvature of the object side surface S13 of the seventh lens L7 at the optical axis O1. By arranging the optical lens 100 to satisfy the above relationship, the ratio of the radius of curvature of the object side surface S13 of the seventh lens L7 at the optical axis O1 to the effective focal length of the optical lens 100 is controlled within a certain range, so that the astigmatism of the seventh lens L7 can be kept within a reasonable range, and the astigmatism generated by the front lenses can be effectively balanced, thereby enabling the optical lens 100 to have good imaging quality.

In some embodiments, the optical lens 100 further satisfies the following relationship: 2.3<f/R14<3. For example, the value of f/R14 may be equal to 2.31, 2.4, 2.5, 2.6, 2.7, 2.8, 2.9, 2.99, etc. Wherein, R14 is a radius of curvature of the image side surface S14 of the seventh lens L7 at the optical axis O1. By arranging the optical lens 100 to satisfy the above relationship, the ratio of the effective focal length of the optical lens 100 to the radius of curvature of the image side surface S14 of the seventh lens L7 at the optical axis O1 is controlled within a certain range, so that the astigmatism of the seventh lens L7 can be kept within a reasonable range, and the astigmatism generated by the front lenses can be effectively balanced, thereby enabling the optical lens 100 to have good imaging quality.

In some embodiments, the optical lens 100 further satisfies the following relationship: 95°<FOV<103°. For example, the value of FOV may be equal to 95.1°, 95.2°, 96°, 97°, 98°, 99°, 100°, 101°, 102°, 102.8°, 102.9°, etc. Wherein, FOV is the maximum field of view angle of the optical lens 100. By arranging the optical lens 100 to satisfy the above relationship, it is beneficial for the optical lens 100 to have a large field of view, thereby enabling it to achieve high resolution and a high pixel count.

In some embodiments, the optical lens 100 further satisfies the following relationship: 1.8<FNO<2. For example, the value of FNO may be equal to 1.81, 1.82, 1.83, 1.84, 1.85, 1.86, 1.87, 1.88, 1.89, 1.9, 1.91, 1.92, 1.93, 1.94, 1.95, 1.96, 1.97, 1.98, 1.99, etc. Wherein, FNO is an F-number of the optical lens 100. By arranging the optical lens 100 to satisfy the above relationship, the optical lens 100 can be ensured to have a large aperture characteristic, so that the optical lens 100 has sufficient light intake, makes the captured images clearer, and enables capturing high-quality night scenes, starry sky, and other object space scenes with low brightness.

In some embodiments, the optical lens 100 further satisfies the following relationship: 2<FNO*tan(HFOV)<2.4. For example, the value of FNO*tan(HFOV) may be equal to 2.01, 2.03, 2.05, 2.07, 2.09, 2.1, 2.12, 2.14, 2.16, 2.18, 2.2, 2.21, 2.23, 2.25, 2.27, 2.29, 2.3, 2.32, 2.34, 2.36, 2.38, 2.39, etc. Wherein, HFOV is half of the maximum field of view angle of the optical lens 100, FNO is an F-number of the optical lens 100. By arranging the optical lens 100 to satisfy the above relationship, it is beneficial for enabling the optical lens 100 to have large aperture and large field of view characteristics, thereby enabling the optical lens 100 to have high pixel and high definition features.

In some embodiments, the optical lens 100 further satisfies the following relationship: 1.1<TTL/TD<1.2. For example, the value of TTL/TD may be equal to 1.101, 1.11, 1.12, 1.13, 1.14, 1.15, 1.16, 1.17, 1.18, 1.19, 1.199, etc. Wherein, TD is a distance from the object side surface S1 of the first lens L1 to the image side surface S14 of the seventh lens L7 along the optical axis O1. By arranging the optical lens 100 to satisfy the above relationship, the sizes and refractive powers of the first lens L1 to the seventh lens L7 are optimized, which can prevent the spherical aberration generated by each lens from being too large, reduce the sensitivity of the optical lens 100, effectively balance the high-order aberrations generated by the optical lens 100, and improve the imaging quality of the optical lens 100.

In some embodiments, the optical lens 100 further satisfies the following relationship: 1.2<TTL/f<1.3. For example, the value of TTL/f may be equal to 1.201, 1.21, 1.22, 1.23, 1.24, 1.25, 1.26, 1.27, 1.28, 1.29, 1.299, etc. By arranging the optical lens 100 to satisfy the above relationship, the optical lens 100 can meet the miniaturization design while meeting the high-definition optical performance. However, when TTL/f<1.2, the optical total length of the optical lens 100 is too short, which will increase the sensitivity of the optical lens 100 and make aberration correction difficult. When TTL/f>1.3, the optical total length of the optical lens 100 is too long, which will cause the chief ray angle of the light entering the imaging plane to be too large, and mismatching with the chief ray angle of the image sensor.

In some embodiments, the optical lens 100 further satisfies the following relationship: 0.9<SD6/SD1<1.1. For example, the value of SD6/SD1 may be equal to 0.901, 0.91, 0.92, 0.93, 0.94, 0.95, 0.96, 0.97, 0.98, 0.99, 1.0, 1.01, 1.02, 1.03, 1.04, 1.05, 1.06, 1.07, 1.08, 1.09, 1.099, etc. Wherein, SD1 is half of a maximum effective aperture of the object side surface S1 of the first lens L1, and SD6 is half of a maximum effective aperture of the image side surface S6 of the third lens L3. By arranging the optical lens 100 to satisfy the above relationship, it is beneficial for better guiding light into the third lens L3, thereby facilitating the improvement of the imaging quality of the optical lens 100.

In some embodiments, the optical lens 100 further satisfies the following relationship: 1.2<SD8/SD1<1.5. For example, the value of SD8/SD1 may be equal to 1.201, 1.21, 1.23, 1.25, 1.27, 1.29, 1.3, 1.32, 1.34, 1.36, 1.38, 1.4, 1.41, 1.42, 1.43, 1.44, 1.45, 1.46, 1.47, 1.48, 1.49, 1.499, etc. Wherein, SD8 is half of a maximum effective aperture of the image side surface S8 of the fourth lens L4. By arranging the optical lens 100 to satisfy the above relationship, it is beneficial for better guiding light into the fourth lens L4, thereby facilitating the improvement of the imaging quality of the optical lens 100.

In some embodiments, the optical lens 100 further satisfies the following relationship: 2.1<SD10/SD1<2.4. For example, the value of SD10/SD1 may be equal to 2.101, 2.11, 2.13, 2.15, 2.17, 2.19, 2.2, 2.22, 2.24, 2.26, 2.28, 2.3, 2.31, 2.33, 2.35, 2.37, 2.39, 2.399, etc. Wherein, SD10 is half of a maximum effective aperture of the image side surface S10 of the fifth lens L5. By arranging the optical lens 100 to satisfy the above relationship, it is beneficial for better guiding light into the fifth lens L5, thereby facilitating the improvement of the imaging quality of the optical lens 100.

In some embodiments, the optical lens 100 further satisfies the following relationship: 1.9<SD14/SD9<2.1. For example, the value of SD14/SD9 may be equal to 1.901, 1.91, 1.93, 1.95, 1.97, 1.99, 2.0, 2.01, 2.03, 2.05, 2.07, 2.09, 2.099, etc. Wherein, SD9 is half of a maximum effective aperture of the object side surface S9 of the fifth lens L5, and SD14 is half of a maximum effective aperture of the image side surface S14 of the seventh lens L7. By arranging the optical lens 100 to satisfy the above relationship, the structural transition of the fifth lens L5, the sixth lens L6, and the seventh lens L7 can be made gentle, so that the light can pass through the fifth lens L5, the sixth lens L6, and the seventh lens L7 smoothly without generating a large step difference, thereby facilitating the improvement of the imaging quality of the optical lens 100.

In some embodiments, the optical lens 100 further satisfies the following relationship: 3.3<SD14/SD1<3.9. For example, the value of SD14/SD1 may be equal to 3.31, 3.33, 3.35, 3.37, 3.39, 3.4, 3.42, 3.44, 3.46, 3.48, 3.5, 3.51, 3.53, 3.55, 3.57, 3.59, 3.6, 3.62, 3.64, 3.68, 3.7, 3.71, 3.73, 3.75, 3.77, 3.79, 3.8, 3.82, 3.84, 3.86, 3.88, 3.89, etc. By arranging the optical lens 100 to satisfy the above relationship, it is beneficial for better guiding light into the seventh lens L7, thereby facilitating the improvement of the imaging quality of the optical lens 100.

In some embodiments, the optical lens 100 further satisfies the following relationship: 0.9<CT7/CT1<1.1. For example, the value of CT7/CT1 may be equal to 0.91, 0.92, 0.93, 0.94, 0.95, 0.96, 0.97, 0.98, 0.99, 1.0, 1.01, 1.02, 1.03, 1.04, 1.05, 1.06, 1.07, 1.08, 1.09, etc. Wherein, CT1 is a thickness of the first lens L1 along the optical axis O1, and CT7 is a thickness of the seventh lens L7 along the optical axis O1. By arranging the optical lens 100 to satisfy the above relationship, it is beneficial for making the first lens L1 and the seventh lens L7 have good thickness uniformity, and while reducing the thickness sensitivity of the optical lens 100, it is also beneficial for balancing the field curvature of the optical lens 100.

In some embodiments, the optical lens 100 further satisfies the following relationship: 0.9<CT2/CT1<1.3. For example, the value of CT2/CT1 may be equal to 0.91, 0.93, 0.95, 0.97, 0.99, 1.0, 1.02, 1.04, 1.06, 1.08, 1.1, 1.11, 1.13, 1.15, 1.17, 1.19, 1.2, 1.22, 1.24, 1.26, 1.28, 1.29, etc. Wherein, CT2 is a thickness of the second lens L2 along the optical axis O1. By arranging the optical lens 100 to satisfy the above relationship, it is beneficial for optimizing the thickness and refractive power of the first lens L1 and the second lens L2, thereby avoiding excessive spherical aberration generated by the front lenses, and facilitating the improvement of the overall resolving power of the optical lens 100 and reducing the thickness sensitivity of the optical lens 100.

In some embodiments, the optical lens 100 further satisfies the following relationship: 1.8<CT1/CT3<2.1. For example, the value of CT1/CT3 may be equal to 1.81, 1.82, 1.83, 1.84, 1.85, 1.86, 1.87, 1.88, 1.89, 1.9, 1.91, 1.92, 1.93, 1.94, 1.95, 1.96, 1.97, 1.98, 1.99, 2.0, 2.01, 2.02, 2.03, 2.04, 2.05, 2.06, 2.07, 2.08, 2.09, etc. Wherein, CT3 is a thickness of the third lens L3 along the optical axis O1. By arranging the optical lens 100 to satisfy the above relationship, it is beneficial for ensuring that the optical lens 100 has good uniformity, and reducing the thickness sensitivity of the optical lens 100, thereby facilitating the balance of the field curvature of the optical lens 100.

In some embodiments, the optical lens 100 further satisfies the following relationship: 1.1<CT2/CT4<1.5. For example, the value of CT2/CT4 may be equal to 1.101, 1.12, 1.14, 1.16, 1.18, 1.2, 1.21, 1.23, 1.25, 1.27, 1.29, 1.3, 1.32, 1.34, 1.36, 1.38, 1.4, 1.41, 1.43, 1.45, 1.47, 1.49, 1.499, etc. Wherein, CT4 is a thickness of the fourth lens L4 along the optical axis O1. By arranging the optical lens 100 to satisfy the above relationship, it is beneficial for making the second lens L2 and the fourth lens L4 have good thickness uniformity, and while reducing the thickness sensitivity of the optical lens 100, it is also beneficial for balancing the field curvature of the optical lens 100.

In some embodiments, the optical lens 100 further satisfies the following relationship: 1.7<CT5/CT3<1.9. For example, the value of CT5/CT3 may be equal to 1.71, 1.72, 1.73, 1.74, 1.75, 1.76, 1.77, 1.78, 1.79, 1.8, 1.81, 1.82, 1.83, 1.84, 1.85, 1.86, 1.87, 1.88, 1.89, etc. Wherein, CT5 is a thickness of the fifth lens L5 along the optical axis O1. By arranging the optical lens 100 to satisfy the above relationship, it is beneficial for making the third lens L3 and the fifth lens L5 have good thickness uniformity, and while reducing the thickness sensitivity of the optical lens 100, it is also beneficial for balancing the field curvature of the optical lens 100.

In some embodiments, the optical lens 100 further satisfies the following relationship: 1.8<CT6/CT3<2. For example, the value of CT6/CT3 may be equal to 1.81, 1.82, 1.83, 1.84, 1.85, 1.86, 1.87, 1.88, 1.89, 1.9, 1.91, 1.92, 1.93, 1.94, 1.95, 1.96, 1.97, 1.98, 1.99, etc. Wherein, CT6 is a thickness of the sixth lens L6 along the optical axis O1. By arranging the optical lens 100 to satisfy the above relationship, it is beneficial for making the third lens L3 and the sixth lens L6 have good thickness uniformity, and while reducing the thickness sensitivity of the optical lens 100, it is also beneficial for balancing the field curvature of the optical lens 100.

In some embodiments, the optical lens 100 further satisfies the following relationship: 2<CT7/CT3<2.8. For example, the value of CT7/CT3 may be equal to 2.01, 2.1, 2.2, 2.3, 2.4, 2.5, 2.6, 2.7, 2.79, etc. By arranging the optical lens 100 to satisfy the above relationship, it is beneficial for making the third lens L3 and the seventh lens L7 have good thickness uniformity, and while reducing the thickness sensitivity of the optical lens 100, it is also beneficial for balancing the field curvature of the optical lens 100.

In some embodiments, the optical lens 100 further satisfies the following relationship: 1.1<CT7/CT5<1.5. For example, the value of CT7/CT5 may be equal to 1.11, 1.13, 1.15, 1.17, 1.19, 1.2, 1.22, 1.24, 1.26, 1.28, 1.3, 1.31, 1.33, 1.35, 1.37, 1.39, 1.4, 1.42, 1.44, 1.46, 1.48, 1.49, etc. By arranging the optical lens 100 to satisfy the above relationship, it is beneficial for making the fifth lens L5 and the seventh lens L7 have good thickness uniformity, and while reducing the thickness sensitivity of the optical lens 100, it is also beneficial for balancing the field curvature of the optical lens 100.

In some embodiments, the optical lens 100 further satisfies the following relationship: 1.1<DL14/DL57<1.2. For example, the value of DL14/DL57 may be equal to 1.101, 1.11, 1.12, 1.13, 1.14, 1.15, 1.16, 1.17, 1.18, 1.19, 1.199, etc. Wherein, DL14 is a distance from the object side surface S1 of the first lens L1 to the image side surface S8 of the fourth lens L4 along the optical axis O1, and DL57 is a distance from the object side surface S9 of the fifth lens L5 to the image side surface S14 of the seventh lens L7 along the optical axis O1. By arranging the optical lens 100 to satisfy the above relationship, the distances between the first lens L1, the second lens L2, the third lens L3, the fourth lens L4 and the fifth lens L5, the sixth lens L6, the seventh lens L7 are reasonably configured, which is beneficial for reducing the length of the optical lens 100 and achieving a miniaturized design.

In some embodiments, the optical lens 100 further satisfies the following relationship: 7.1<DL14/AT12<7.6. For example, the value of DL14/AT12 may be equal to 7.101, 7.11, 7.13, 7.15, 7.17, 7.19, 7.2, 7.22, 7.24, 7.26, 7.28, 7.3, 7.31, 7.35, 7.37, 7.39, 7.4, 7.42, 7.44, 7.46, 7.48, 7.5, 7.51, 7.53, 7.55, 7.57, 7.59, 7.599, etc. Wherein, AT12 is a distance on the optical axis O1 from the image side surface S2 of the first lens L1 to the object side surface S3 of the second lens L2. By arranging the optical lens 100 to satisfy the above relationship, the spacing between the first lens L1 and the second lens L2 is reasonably configured, which is beneficial for reducing the length of the optical lens 100 and achieving a miniaturized design.

In some embodiments, the optical lens 100 further satisfies the following relationship: 6.3<DL14/AT34<7.2. For example, the value of DL14/AT34 may be equal to 6.31, 6.4, 6.5, 6.6, 6.7, 6.8, 6.9, 7.0, 7.1, 7.2, 7.3, 7.4, 7.5, 7.59, etc. Wherein, AT34 is a distance on the optical axis O1 from the image side surface S6 of the third lens L3 to the object side surface S7 of the fourth lens L4. By arranging the optical lens 100 to satisfy the above relationship, the spacing between the third lens L3 and the fourth lens L4 is reasonably configured, which is beneficial for reducing the length of the optical lens 100 and achieving a miniaturized design.

In some embodiments, the optical lens 100 further satisfies the following relationship: 7.9<(DL14+DL57)/AT45<11. For example, the value of (DL14+DL57)/AT45 may be equal to 7.91, 7.93, 7.95, 7.97, 7.99, 8.0, 8.2, 8.4, 8.6, 8.8, 9.0, 9.1, 9.3, 9.5, 9.7, 9.9, 10.0, 10.1, 10.3, 10.5, 10.7, 10.9, 10.99, etc. Wherein, AT45 is a distance on the optical axis O1 from the image side surface S8 of the fourth lens L4 to the object side surface S9 of the fifth lens L5. By arranging the optical lens 100 to satisfy the above relationship, the spacing between the fourth lens L4 and the fifth lens L5 is reasonably configured, which is beneficial for reducing the length of the optical lens 100 and achieving a miniaturized design.

In some embodiments, the optical lens 100 further satisfies the following relationship: 1.6<SD9/Yc9<1.9. For example, the value of SD9/Yc9 may be equal to 1.61, 1.63, 1.65, 1.67, 1.69, 1.7, 1.72, 1.74, 1.76, 1.78, 1.8, 1.81, 1.83, 1.85, 1.87, 1.89, etc. Wherein, SD9 is half of a maximum effective aperture of the object side surface S9 of the fifth lens L5, and Yc9 is a vertical distance from an off-axis vertex of the object side surface S9 of the fifth lens L5 to the optical axis O1. By arranging the optical lens 100 to satisfy the above relationship, the surface shape of the object side surface S9 of the fifth lens L5 is reasonably configured, which is beneficial for manufacturing the fifth lens L5.

In some embodiments, the optical lens 100 further satisfies the following relationship: 1.5<SD10/Yc10<1.7. For example, the value of SD10/Yc10 may be equal to 1.501, 1.51, 1.53, 1.55, 1.57, 1.59, 1.6, 1.62, 1.64, 1.66, 1.68, 1.69, 1.699, etc. Wherein, SD10 is half of a maximum effective aperture of the image side surface S10 of the fifth lens L5, and Yc10 is a vertical distance from an off-axis vertex of the image side surface S10 of the fifth lens L5 to the optical axis O1. By arranging the optical lens 100 to satisfy the above relationship, the surface shape of the image side surface S10 of the fifth lens L5 is reasonably configured, which is beneficial for manufacturing the fifth lens L5.

In some embodiments, the optical lens 100 further satisfies the following relationship: 2.2<SD11/Yc11<2.5. For example, the value of SD11/Yc11 may be equal to 2.201, 2.21, 2.23, 2.25, 2.27, 2.29, 2.3, 2.32, 2.34, 2.36, 2.38, 2.4, 2.41, 2.43, 2.45, 2.47, 2.49, 2.499, etc. Wherein, SD11 is half of a maximum effective aperture of the object side surface S11 of the sixth lens L6, and Yc11 is a vertical distance from an off-axis vertex of the object side surface S11 of the sixth lens L6 to the optical axis O1. By arranging the optical lens 100 to satisfy the above relationship, the surface shape of the object side surface S11 of the sixth lens L6 is reasonably configured, which is beneficial for manufacturing the sixth lens L6.

In some embodiments, the optical lens 100 further satisfies the following relationship: 1.9<SD12/Yc12<2.1. For example, the value of SD12/Yc12 may be equal to 1.901, 1.91, 1.93, 1.95, 1.97, 1.99, 2.0, 2.01, 2.03, 2.05, 2.07, 2.09, 2.099, etc. Wherein, SD12 is half of a maximum effective aperture of the image side surface S12 of the sixth lens L6, and Yc12 is a vertical distance from an off-axis vertex of the image side surface S12 of the sixth lens L6 to the optical axis O1. By arranging the optical lens 100 to satisfy the above relationship, the surface shape of the image side surface S12 of the sixth lens L6 is reasonably configured, which is beneficial for manufacturing the sixth lens L6.

In some embodiments, the optical lens 100 further satisfies the following relationship: 1.4<SD13/Yc13<5.4. For example, the value of SD13/Yc13 may be equal to 1.41, 1.5, 1.6, 1.7, 1.8, 1.9, 2.0, 2.2, 2.4, 2.6, 2.8, 3.0, 3.1, 3.3, 3.5, 3.7, 3.9, 4.0, 4.2, 4.4, 4.6, 4.8, 5.0, 5.1, 5.2, 5.3, 5.39, etc. Wherein, SD13 is half of a maximum effective aperture of the object side surface S13 of the seventh lens L7, and Yc13 is a vertical distance from an off-axis vertex of the object side surface S13 of the seventh lens L7 to the optical axis O1. By arranging the optical lens 100 to satisfy the above relationship, the surface shape of the object side surface S13 of the seventh lens L7 is reasonably configured, which is beneficial for manufacturing the seventh lens L7.

In some embodiments, the optical lens 100 further satisfies the following relationship: 1.9<SD14/Yc14<2.7. For example, the value of SD14/Yc14 may be equal to 1.91, 1.93, 1.95, 1.97, 1.99, 2.0, 2.1, 2.2, 2.3, 2.4, 2.5, 2.6, 2.61, 2.62, 2.63, 2.64, 2.65, 2.66, 2.67, 2.68, 2.69, etc. Wherein, SD14 is half of a maximum effective aperture of the image side surface S14 of the seventh lens L7, and Yc14 is a vertical distance from an off-axis vertex of the image side surface S14 of the seventh lens L7 to the optical axis O1. By arranging the optical lens 100 to satisfy the above relationship, the surface shape of the image side surface S14 of the seventh lens L7 is reasonably configured, which is beneficial for manufacturing the seventh lens L7.

The surface shape of each aspheric lens can be defined by the following aspheric formula: $Z = \frac{{cr}^{2}}{1 + \sqrt{1 - \left(k+1\right) {c}^{2} {r}^{2}}} + \sum A i {r}^{i}$

Wherein, Z is a distance from a corresponding point on the aspheric surface to a plane tangent to the vertex of the surface, r is a distance from the corresponding point on the aspheric surface to the optical axis 101, c is a curvature of the vertex of the aspheric surface, k is the conic coefficient, and Ai is the coefficient corresponding to the i-th higher-order term of the aspheric surface shape formula.

Hereinafter, the optical lens 100 according to different embodiments will be described in detail with reference to specific parameters.

### First Embodiment

Referring to FIG. 1, the optical lens 100 in the first embodiment includes a total of seven lenses with refractive power. From an object side to an image side along an optical axis O1, a stop STO, a first lens L1, a second lens L2, a third lens L3, a fourth lens L4, a fifth lens L5, a sixth lens L6, a seventh lens L7, and an infrared filter IR.

The first lens L1 has positive refractive power, the second lens L2 has positive refractive power, the third lens L3 has negative refractive power, the fourth lens L4 has positive refractive power, the fifth lens L5 has positive refractive power, the sixth lens L6 has negative refractive power, and the seventh lens L7 has negative refractive power. An object side surface S1 of the first lens L1 is convex in a paraxial region thereof, and an image side surface S2 of the first lens L1 is concave in a paraxial region thereof. An object side surface S3 of the second lens L2 is convex in a paraxial region thereof, and an image side surface S4 of the second lens L2 is convex in a paraxial region thereof. An object side surface S5 of the third lens L3 is concave in a paraxial region thereof, and an image side surface S6 of the third lens L3 is convex in a paraxial region thereof. An object side surface S7 of the fourth lens L4 is concave in a paraxial region thereof, and an image side surface S8 of the fourth lens L4 is convex in a paraxial region thereof. An object side surface S9 of the fifth lens L5 is convex in a paraxial region thereof, and an image side surface S10 of the fifth lens L5 is concave in a paraxial region thereof. An object side surface S11 of the sixth lens L6 is convex in a paraxial region thereof, and an image side surface S12 of the sixth lens L6 is concave in a paraxial region thereof. An object side surface S13 of the seventh lens L7 is convex in a paraxial region thereof, and an image side surface S14 of the seventh lens L7 is concave in a paraxial region thereof.

Specifically, in Table 1a, the Y radius is a radius of curvature of the object side surface or the image side surface of the corresponding surface numeral at the optical axis O1. In the "thickness" parameter column of a lens, the first value is the thickness of the lens at the optical axis O1, and the second value is the distance from the image side surface of the lens to the next surface at the optical axis O1. The value in the "thickness" parameter column for the stop STO is the distance from the stop STO to the vertex of the next surface (the vertex refers to the intersection of the surface with the optical axis O1) along the optical axis O1. By default, the direction from the object side surface S1 of the first lens L1 to the image side surface S14 of the seventh lens L7 is the positive direction of the optical axis O1. When this value is negative, it indicates that the stop STO is disposed on the image side of the vertex of the next surface; if the thickness value of the stop STO is positive, the stop STO is on the object side of the vertex of the next surface. It can be understood that the units of the Y radius, thickness, and effective focal length in Table 1a are all millimeters (mm). Moreover, the reference wavelength for the refractive index, Abbe number, and effective focal length of each lens in Table 1a is 555.0000 nm.

In the first embodiment, the object side surface and the image side surface of each lens are aspherical surfaces. Table 1b provides the conic constant k and the high-order coefficients A4, A6, A8, A10, A12, A14, A16, A18, A20, A22, A24, A26, A28, A30 that can be used for the aspherical lens surfaces in the first embodiment.

**Table 1a**

| First embodiment | | | | | | | | |
|---|---|---|---|---|---|---|---|---|
| F=6.805mm, FNO=1.94, FOV=98.8°, TTL=8.28mm, ImgH=8.052mm | | | | | | | | |
| Surface numeral | Surface Name | Surface type | Curvature radius | Thickness | Material | Refractive index | Abbe number | Focal length |
| OBJ | Object side | sphere | Infinity | Infinity | | | | |
| STO | stop | sphere | Infinity | -0.467 | | | | |
| S1 | L1 | asphere | 2.771 | 0.699 | Plastic | 1.546 | 56.037 | 9.243 |
| S2 | | asphere | 5.600 | 0.452 | | | | |
| S3 | L2 | asphere | 21.838 | 0.695 | Plastic | 1.546 | 56.037 | 10.641 |
| S4 | | asphere | -7.826 | 0.030 | | | | |
| S5 | L3 | asphere | -8.486 | 0.380 | Plastic | 1.677 | 19.239 | -17.973 |
| S6 | | asphere | -28.553 | 0.464 | | | | |
| S7 | L4 | asphere | -18.593 | 0.580 | Plastic | 1.677 | 19.239 | 946.251 |
| S8 | | asphere | -18.296 | 0.791 | | | | |
| S9 | L5 | asphere | 11.634 | 0.660 | Plastic | 1.537 | 55.685 | 41.195 |
| S10 | | asphere | 24.075 | 0.299 | | | | |
| S11 | L6 | asphere | 5.200 | 0.693 | Plastic | 1.591 | 28.364 | -200.861 |
| S12 | | asphere | 4.736 | 0.554 | | | | |
| S13 | L7 | asphere | 5.437 | 0.780 | Plastic | 1.570 | 37.400 | -7.957 |
| S14 | | asphere | 2.344 | 0.443 | | | | |
| S15 | Filter IR | sphere | Infinity | 0.210 | Glass | 1.518 | 64.166 | |
| S16 | | sphere | Infinity | 0.551 | | | | |
| IMG | Imaging plane | sphere | Infinity | 0.000 | | | | |
| Reference wavelength: 555.0 nm | | | | | | | | |

**Table 1b**

| Aspherical coefficients of first embodiment | | | | | |
|---|---|---|---|---|---|
| Surface numeral | K | A4 | A6 | A8 | A10 |
| 1 | -1.3178E+01 | 7.5340E-02 | -5.3321E-02 | 4.3992E-02 | -3.2234E-02 |
| 2 | -8.3832E+01 | 5.4723E-02 | -6.3937E-02 | 6.2967E-02 | -4.8422E-02 |
| 3 | 3.3529E+01 | -1.1444E-02 | -3.2045E-03 | 3.0879E-03 | -2.6437E-03 |
| 4 | -3.0631E+01 | -3.1605E-02 | 1.3511E-02 | -1.2854E-02 | 9.1801E-03 |
| 5 | -1.5148E+01 | -1.0467E-02 | 3.0921E-02 | -1.2356E-01 | 3.5612E-01 |
| 6 | -9.9000E+01 | -1.8713E-05 | 2.9868E-02 | -1.2918E-01 | 3.4358E-01 |
| 7 | 2.6760E+01 | -2.1056E-02 | 3.2461E-02 | -1.3716E-01 | 3.5752E-01 |
| 8 | -3.3217E+01 | -1.4079E-02 | 3.0424E-03 | -1.1143E-02 | 1.9374E-02 |
| 9 | 4.2233E+00 | 1.7618E-02 | -1.4202E-02 | 1.1383E-02 | -9.0416E-03 |
| 10 | 2.2840E+01 | 3.9018E-02 | -2.4501E-02 | 1.1559E-02 | -4.0147E-03 |
| 11 | -3.5969E+01 | 4.3065E-02 | -2.7002E-02 | 9.1194E-03 | -2.3419E-03 |
| 12 | -4.6724E+01 | 3.5848E-02 | -1.7322E-02 | 4.9048E-03 | -1.1089E-03 |
| 13 | -9.9000E+01 | -3.4295E-02 | 5.4591E-03 | 5.8681E-04 | -3.4631E-04 |
| 14 | -9.3995E+00 | -2.1515E-02 | 4.6008E-03 | -7.6186E-04 | 9.6258E-05 |

| Surface numeral | A12 | A14 | A16 | A18 | A20 |
|---|---|---|---|---|---|
| 1 | 1.7801E-02 | -6.8065E-03 | 1.6596E-03 | -2.3081E-04 | 1.3910E-05 |
| 2 | 2.5659E-02 | -8.9174E-03 | 1.8926E-03 | -2.1205E-04 | 8.6581E-06 |
| 3 | 1.4903E-03 | -3.6603E-04 | -1.7650E-05 | 3.1752E-05 | -5.4460E-06 |
| 4 | -3.4169E-03 | 3.2129E-04 | 1.7679E-04 | -5.6453E-05 | 4.7903E-06 |
| 5 | -7.2438E-01 | 1.0389E+00 | -1.0645E+00 | 7.8724E-01 | -4.2067E-01 |
| 6 | -6.3992E-01 | 8.5274E-01 | -8.2523E-01 | 5.8358E-01 | -3.0075E-01 |
| 7 | -6.3051E-01 | 7.7712E-01 | -6.8510E-01 | 4.3731E-01 | -2.0249E-01 |
| 8 | -2.2196E-02 | 1.7707E-02 | -1.0049E-02 | 4.1014E-03 | -1.2058E-03 |
| 9 | 5.3611E-03 | -2.3028E-03 | 7.1370E-04 | -1.5957E-04 | 2.5638E-05 |
| 10 | 9.8851E-04 | -1.7605E-04 | 2.3159E-05 | -2.2720E-06 | 1.6528E-07 |
| 11 | 4.5323E-04 | -6.4541E-05 | 6.7582E-06 | -5.2493E-07 | 3.0416E-08 |
| 12 | 2.0341E-04 | -2.9323E-05 | 3.2104E-06 | -2.6020E-07 | 1.5325E-08 |
| 13 | 5.9298E-05 | -5.3544E-06 | 2.3395E-07 | 2.2820E-09 | -9.5440E-10 |
| 14 | -8.9063E-06 | 6.0817E-07 | -3.1549E-08 | 1.2800E-09 | -4.1161E-11 |

| Surface numeral | A22 | A24 | A26 | A28 | A30 |
|---|---|---|---|---|---|
| 1 | 0.0000E+00 | 0.0000E+00 | 0.0000E+00 | 0.0000E+00 | 0.0000E+00 |
| 2 | 0.0000E+00 | 0.0000E+00 | 0.0000E+00 | 0.0000E+00 | 0.0000E+00 |
| 3 | 0.0000E+00 | 0.0000E+00 | 0.0000E+00 | 0.0000E+00 | 0.0000E+00 |
| 4 | 0.0000E+00 | 0.0000E+00 | 0.0000E+00 | 0.0000E+00 | 0.0000E+00 |
| 5 | 1.6078E-01 | -0.04281632 | 7.5400E-03 | -7.8857E-04 | 3.7060E-05 |
| 6 | 1.1147E-01 | -2.8893E-02 | 4.9648E-03 | -5.0763E-04 | 2.3362E-05 |
| 7 | 6.7339E-02 | -1.5673E-02 | 2.4232E-03 | -2.2352E-04 | 9.3071E-06 |
| 8 | 2.5281E-04 | -3.6833E-05 | 3.5395E-06 | -2.0153E-07 | 5.1470E-09 |
| 9 | -2.9228E-06 | 2.3014E-07 | -1.1877E-08 | 3.6093E-10 | -4.8894E-12 |
| 10 | -8.7046E-09 | 3.1664E-10 | -7.3104E-12 | 9.0561E-14 | -3.8312E-16 |
| 11 | -1.3071E-09 | 4.0637E-11 | -8.6558E-13 | 1.1291E-14 | -6.7873E-17 |
| 12 | -6.4394E-10 | 1.8776E-11 | -3.6100E-13 | 4.1201E-15 | -2.1170E-17 |
| 13 | 6.1058E-11 | -2.1218E-12 | 4.3871E-14 | -5.0877E-16 | 2.5610E-18 |
| 14 | 1.0337E-12 | -1.9370E-14 | 2.5089E-16 | -1.9775E-18 | 7.0809E-21 |

Please refer to FIG. 2. Part (A) of FIG. 2 illustrates longitudinal spherical aberration curves of the optical lens 100 in the first embodiment at wavelengths of 650.0000 nm, 610.0000 nm, 555.0000 nm, 510.0000 nm, 470.0000 nm, and 435.0000 nm, respectively. Wherein, the horizontal coordinate along the X-axis represents the deviation of the focus point in millimeters, and the vertical coordinate along the Y-axis represents the normalized field of view. From part (A) of FIG. 2, it can be seen that the spherical aberration data of the optical lens 100 in the first embodiment is good, indicating that the imaging quality of the optical lens 100 in this embodiment is good.

Part (B) of FIG. 2 illustrates an astigmatism diagram of the optical lens 100 in the first embodiment at a wavelength of 555.0000 nm. Wherein, the horizontal coordinate along the X-axis represents the deviation of the focus point in millimeters, and the vertical coordinate along the Y-axis represents the field of view in degrees. In the astigmatism diagram, the T curve represents the curvature of the imaging plane IMG in the tangential direction, and the S curve represents the curvature of the imaging plane IMG in the sagittal direction. From part (B) of FIG. 2, it can be seen that the astigmatism of the optical lens 100 has been well compensated at this wavelength.

Part (C) of FIG. 2 illustrates a distortion curve of the optical lens 100 in the first embodiment at a wavelength of 555.0000 nm. Wherein, the horizontal coordinate along the X-axis represents distortion, and the vertical coordinate along the Y-axis represents the field of view in degrees. From part (C) of FIG. 2, it can be seen that the distortion of the optical lens 100 has been well corrected at this wavelength.

### Second Embodiment

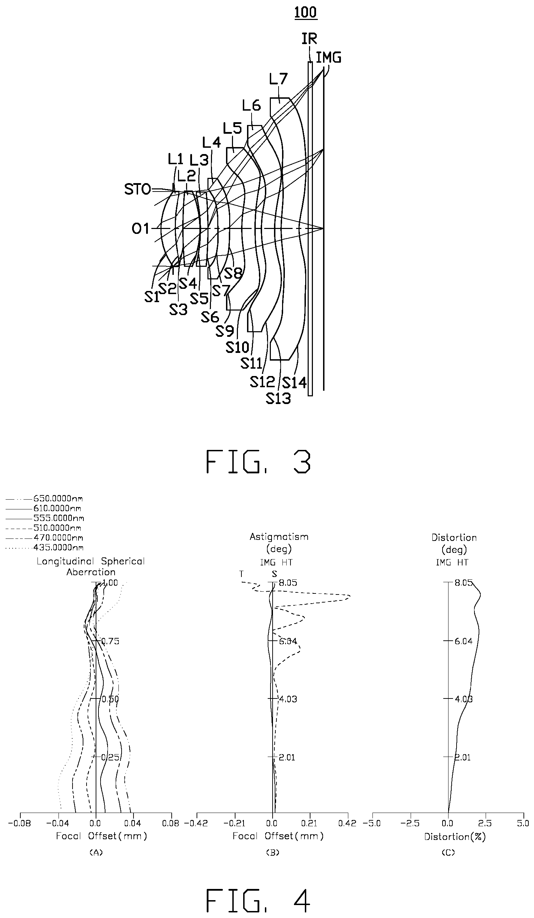

Referring to FIG. 3, the optical lens 100 in the second embodiment includes a total of seven lenses with refractive power. The structure of the optical lens 100, the refractive power of each lens, and the surface shape of each lens may refer to the first embodiment. With the difference that in the second embodiment, the sixth lens L6 has positive refractive power. Other parameters in the second embodiment are given in the following Table 2a, and the definitions of each parameter can be derived from the description of the previous embodiment and will not be repeated here.

In the second embodiment, the object side surface and the image side surface of each lens are aspherical surfaces. Table 2b provides the conic constant k and the high-order coefficients A4, A6, A8, A10, A12, A14, A16, A18, A20, A22, A24, A26, A28, A30 that can be used for the aspherical lens surfaces in the second embodiment.

**Table 2a**

| Second embodiment | | | | | | | | |
|---|---|---|---|---|---|---|---|---|
| F=6.70mm, FNO=1.83, FOV=99.7°, TTL=8.18mm, ImgH=8.052mm | | | | | | | | |
| Surface numeral | Surface Name | Surface type | Curvature radius | Thickness | Material | Refractive index | Abbe number | Focal length |
| OBJ | Object side | sphere | Infinity | Infinity | | | | |
| STO | stop | sphere | Infinity | -0.500 | | | | |
| S1 | L1 | asphere | 2.806 | 0.688 | Plastic | 1.546 | 56.037 | 9.587 |
| S2 | | asphere | 5.526 | 0.464 | | | | |
| S3 | L2 | asphere | 18.853 | 0.784 | Plastic | 1.546 | 56.037 | 10.968 |
| S4 | | asphere | -8.646 | 0.030 | | | | |
| S5 | L3 | asphere | -14.063 | 0.360 | Plastic | 1.677 | 19.239 | -24.047 |
| S6 | | asphere | -104.399 | 0.532 | | | | |
| S7 | L4 | asphere | -13.245 | 0.580 | Plastic | 1.677 | 19.239 | 454.984 |
| S8 | | asphere | -12.923 | 0.639 | | | | |
| S9 | L5 | asphere | 13.692 | 0.659 | Plastic | 1.537 | 55.685 | 47.211 |
| S10 | | asphere | 29.300 | 0.314 | | | | |
| S11 | L6 | asphere | 6.170 | 0.674 | Plastic | 1.591 | 28.364 | 57.483 |
| S12 | | asphere | 7.232 | 0.452 | | | | |
| S13 | L7 | asphere | 8.460 | 0.780 | Plastic | 1.570 | 37.400 | -6.526 |
| S14 | | asphere | 2.497 | 0.483 | | | | |
| S15 | Filter IR | sphere | Infinity | 0.150 | Glass | 1.518 | 64.166 | |
| S16 | | sphere | Infinity | 0.591 | | | | |
| IMG | Imaging plane | sphere | Infinity | 0.000 | | | | |
| Reference wavelength: 555.0 nm | | | | | | | | |

**Table 2b**

| Aspherical coefficients of second embodiment | | | | | |
|---|---|---|---|---|---|
| Surface numeral | K | A4 | A6 | A8 | A10 |
| 1 | -1.4119E+01 | 7.5664E-02 | -5.3705E-02 | 4.0056E-02 | -2.5091E-02 |
| 2 | -9.0299E+01 | 6.0789E-02 | -7.5018E-02 | 7.7912E-02 | -6.2278E-02 |
| 3 | 6.3389E+01 | -8.5655E-03 | -3.8999E-03 | 5.0349E-03 | -5.8038E-03 |
| 4 | -3.1020E+01 | -3.2562E-02 | 1.6479E-02 | -1.6571E-02 | 1.3462E-02 |
| 5 | 8.3210E+00 | -1.0341E-02 | -2.9966E-02 | 2.0533E-01 | -6.5302E-01 |
| 6 | 9.9000E+01 | -1.7356E-03 | 2.3354E-02 | -1.2337E-01 | 3.7537E-01 |
| 7 | -8.9579E+00 | -2.1863E-02 | 5.6460E-02 | -2.2741E-01 | 5.5928E-01 |
| 8 | -1.4359E+01 | -1.1650E-02 | 4.9427E-03 | -1.7460E-02 | 2.7397E-02 |
| 9 | 6.1846E+00 | 1.8114E-02 | -1.3260E-02 | 1.0648E-02 | -8.6634E-03 |
| 10 | 3.3344E+01 | 2.7337E-02 | -8.0633E-03 | 1.7054E-03 | -6.2886E-04 |
| 11 | -4.6873E+01 | 3.7817E-02 | -2.0478E-02 | 5.0759E-03 | -7.3712E-04 |
| 12 | -3.6026E+01 | 3.4170E-02 | -1.2172E-02 | 7.3653E-04 | 6.2111E-04 |
| 13 | -9.9000E+01 | -3.1547E-02 | 1.3349E-02 | -5.4190E-03 | 1.6727E-03 |
| 14 | -8.0390E+00 | -2.1985E-02 | 6.0354E-03 | -1.5705E-03 | 3.0778E-04 |

| Surface numeral | A12 | A14 | A16 | A18 | A20 |
|---|---|---|---|---|---|
| 1 | 1.1475E-02 | -3.5902E-03 | 7.0594E-04 | -7.7426E-05 | 3.5892E-06 |
| 2 | 3.4304E-02 | -1.2511E-02 | 2.8572E-03 | -3.6566E-04 | 1.9860E-05 |
| 3 | 4.4203E-03 | -2.1020E-03 | 6.1503E-04 | -9.8499E-05 | 6.4303E-06 |
| 4 | -7.6038E-03 | 2.8627E-03 | -6.8513E-04 | 9.3780E-05 | -5.5641E-06 |
| 5 | 1.2916E+00 | -1.7283E+00 | 1.6237E+00 | -1.0896E+00 | 5.2439E-01 |
| 6 | -7.3940E-01 | 9.8744E-01 | -9.2393E-01 | 6.1684E-01 | -2.9543E-01 |
| 7 | -9.2411E-01 | 1.0670E+00 | -8.8180E-01 | 5.2801E-01 | -2.2947E-01 |
| 8 | -2.8560E-02 | 2.1060E-02 | -1.1147E-02 | 4.2571E-03 | -1.1706E-03 |
| 9 | 4.6175E-03 | -1.6212E-03 | 3.8339E-04 | -6.1052E-05 | 6.3268E-06 |
| 10 | 2.2557E-04 | -5.3643E-05 | 8.0991E-06 | -7.4962E-07 | 3.5563E-08 |
| 11 | 1.2722E-05 | 2.0883E-05 | -5.0793E-06 | 6.5514E-07 | -5.4172E-08 |
| 12 | -2.4760E-04 | 5.0949E-05 | -6.8657E-06 | 6.4149E-07 | -4.2186E-08 |
| 13 | -3.4185E-04 | 4.7057E-05 | -4.5125E-06 | 3.0796E-07 | -1.5062E-08 |
| 14 | -4.1690E-05 | 3.9513E-06 | -2.6763E-07 | 1.3106E-08 | -4.6422E-10 |

| Surface numeral | A22 | A24 | A26 | A28 | A30 |
|---|---|---|---|---|---|
| 1 | 0.0000E+00 | 0.0000E+00 | 0.0000E+00 | 0.0000E+00 | 0.0000E+00 |
| 2 | 0.0000E+00 | 0.0000E+00 | 0.0000E+00 | 0.0000E+00 | 0.0000E+00 |
| 3 | 0.0000E+00 | 0.0000E+00 | 0.0000E+00 | 0.0000E+00 | 0.0000E+00 |
| 4 | 0.0000E+00 | 0.0000E+00 | 0.0000E+00 | 0.0000E+00 | 0.0000E+00 |
| 5 | -1.7940E-01 | 4.2556E-02 | -6.6493E-03 | 6.1517E-04 | -2.5519E-05 |
| 6 | 1.0073E-01 | -2.3866E-02 | 3.7343E-03 | -3.4700E-04 | 1.4503E-05 |
| 7 | 7.1647E-02 | -1.5659E-02 | 2.2735E-03 | -1.9692E-04 | 7.6989E-06 |
| 8 | 2.2899E-04 | -3.1014E-05 | 2.7575E-06 | -1.4445E-07 | 3.3716E-09 |
| 9 | -3.8127E-07 | 7.4338E-09 | 5.9029E-10 | -4.2525E-11 | 8.5215E-13 |
| 10 | 1.8709E-10 | -1.3194E-10 | 7.7487E-12 | -2.0368E-13 | 2.1165E-15 |
| 11 | 3.0063E-09 | -1.1186E-10 | 2.6850E-12 | -3.7664E-14 | 2.3498E-16 |
| 12 | 1.9436E-09 | -6.1337E-11 | 1.2620E-12 | -1.5244E-14 | 8.1980E-17 |
| 13 | 5.2417E-10 | -1.2667E-11 | 2.0193E-13 | -1.9090E-15 | 8.1028E-18 |
| 14 | 1.1757E-11 | -2.0725E-13 | 2.4119E-15 | -1.6641E-17 | 5.1520E-20 |

Please refer to FIG. 4. From the longitudinal spherical aberration diagram in part (A) of FIG. 4, the astigmatism diagram in part (B) of FIG. 4, and the distortion curve in part (C) of FIG. 4, it can be seen that the longitudinal spherical aberration, astigmatism, and distortion of the optical lens 100 in the second embodiment are well controlled, thus the optical lens 100 of this embodiment has good imaging quality. In addition, the wavelengths corresponding to the curves in parts (A), (B), and (C) of FIG. 4 may refer to the description of parts (A), (B), and (C) in FIG. 2 in the first embodiment, which will not be repeated here.

### Third Embodiment

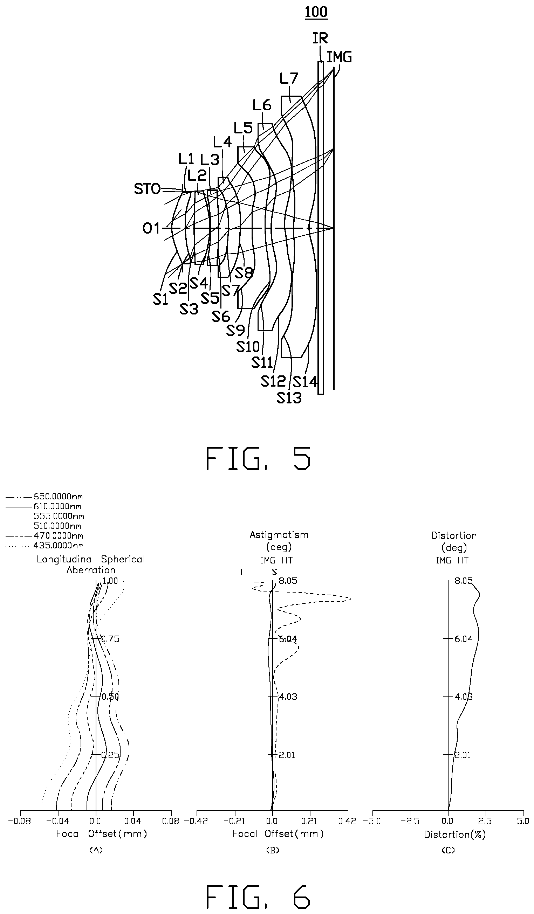

Referring to FIG. 5, a schematic structural diagram of an optical lens 100 disclosed in a third embodiment of the present disclosure is shown. The structure of the optical lens 100, the refractive power of each lens, and the surface shape of each lens may refer to the first embodiment. With the difference that in the third embodiment, the sixth lens L6 has positive refractive power. Other parameters in the third embodiment are given in the following Table 3a, and the definitions of each parameter can be derived from the description of the previous embodiment and will not be repeated here.

In the third embodiment, the object side surface and the image side surface of each lens are aspherical surfaces. Table 3b provides the conic constant k and the high-order coefficients A4, A6, A8, A10, A12, A14, A16, A18, A20, A22, A24, A26, A28, A30 that can be used for the aspherical lens surfaces in the third embodiment.

**Table 3a**

| Third embodiment | | | | | | | | |
|---|---|---|---|---|---|---|---|---|
| F=6.629mm, FNO=1.83, FOV=100.1°, TTL=8.18mm, ImgH=8.052mm | | | | | | | | |
| Surface numeral | Surface Name | Surface type | Curvature radius | Thickness | Material | Refractive index | Abbe number | Focal length |
| OBJ | Object side | sphere | Infinity | Infinity | | | | |
| STO | stop | sphere | Infinity | -0.506 | | | | |
| S1 | L1 | asphere | 2.805 | 0.687 | Plastic | 1.546 | 56.037 | 9.557 |
| S2 | | asphere | 5.543 | 0.464 | | | | |
| S3 | L2 | asphere | 18.827 | 0.773 | Plastic | 1.546 | 56.037 | 11.072 |
| S4 | | asphere | -8.774 | 0.030 | | | | |
| S5 | L3 | asphere | -14.669 | 0.360 | Plastic | 1.677 | 19.239 | -25.051 |
| S6 | | asphere | -109.730 | 0.532 | | | | |
| S7 | L4 | asphere | -13.237 | 0.580 | Plastic | 1.677 | 19.239 | 647.026 |
| S8 | | asphere | -13.076 | 0.634 | | | | |
| S9 | L5 | asphere | 13.796 | 0.659 | Plastic | 1.537 | 55.685 | 47.742 |
| S10 | | asphere | 29.398 | 0.311 | | | | |
| S11 | L6 | asphere | 6.036 | 0.682 | Plastic | 1.591 | 28.364 | 59.244 |
| S12 | | asphere | 6.986 | 0.458 | | | | |
| S13 | L7 | asphere | 8.029 | 0.780 | Plastic | 1.570 | 37.400 | -6.611 |
| S14 | | asphere | 2.474 | 0.457 | | | | |
| S15 | Filter IR | sphere | Infinity | 0.210 | Glass | 1.518 | 64.166 | |
| S16 | | sphere | Infinity | 0.564 | | | | |
| IMG | Imaging plane | sphere | Infinity | 0.000 | | | | |
| Reference wavelength: 555.0 nm | | | | | | | | |

**Table 3b**

| Aspherical coefficients of third embodiment | | | | | |
|---|---|---|---|---|---|
| Surface numeral | K | A4 | A6 | A8 | A10 |
| 1 | -1.4100E+01 | 7.5168E-02 | -5.2024E-02 | 3.7541E-02 | -2.2912E-02 |
| 2 | -8.9662E+01 | 6.0458E-02 | -7.4928E-02 | 7.8984E-02 | -6.4283E-02 |
| 3 | 6.4508E+01 | -8.8953E-03 | -2.7989E-03 | 3.0749E-03 | -3.6382E-03 |
| 4 | -3.1834E+01 | -3.2348E-02 | 1.6130E-02 | -1.5527E-02 | 1.2102E-02 |
| 5 | 1.0039E+01 | -1.4555E-02 | 3.2621E-03 | 6.2986E-02 | -2.6835E-01 |
| 6 | -9.9000E+01 | -1.5974E-03 | 1.9028E-02 | -9.4994E-02 | 2.8487E-01 |
| 7 | -9.9830E+00 | -2.1059E-02 | 5.2478E-02 | -2.1786E-01 | 5.4629E-01 |
| 8 | -1.4633E+01 | -1.1646E-02 | 5.0047E-03 | -1.7748E-02 | 2.8370E-02 |
| 9 | 6.6372E+00 | 1.6180E-02 | -7.7589E-03 | 3.1366E-03 | -2.4247E-03 |
| 10 | 3.2974E+01 | 2.7218E-02 | -7.6277E-03 | 1.0096E-03 | -1.2029E-04 |
| 11 | -4.6812E+01 | 3.8388E-02 | -2.1067E-02 | 5.3937E-03 | -8.3521E-04 |
| 12 | -3.6359E+01 | 3.4044E-02 | -1.2565E-02 | 1.1469E-03 | 4.3276E-04 |
| 13 | -9.9000E+01 | -3.1009E-02 | 1.3214E-02 | -5.5053E-03 | 1.7246E-03 |
| 14 | -7.9462E+00 | -2.3008E-02 | 6.9354E-03 | -1.8907E-03 | 3.7312E-04 |

| Surface numeral | A12 | A14 | A16 | A18 | A20 |
|---|---|---|---|---|---|
| 1 | 1.0338E-02 | -3.2354E-03 | 6.4349E-04 | -7.2171E-05 | 3.4683E-06 |
| 2 | 3.6088E-02 | -1.3418E-02 | 3.1247E-03 | -4.0824E-04 | 2.2681E-05 |
| 3 | 2.9324E-03 | -1.4703E-03 | 4.5484E-04 | -7.6190E-05 | 5.1007E-06 |
| 4 | -6.6921E-03 | 2.5088E-03 | -6.0316E-04 | 8.3148E-05 | -4.9724E-06 |
| 5 | 5.9668E-01 | -8.5740E-01 | 8.4862E-01 | -5.9394E-01 | 2.9628E-01 |
| 6 | -5.6377E-01 | 7.6102E-01 | -7.2127E-01 | 4.8811E-01 | -2.3700E-01 |
| 7 | -9.1513E-01 | 1.0673E+00 | -8.8883E-01 | 5.3542E-01 | -2.3382E-01 |
| 8 | -3.0160E-02 | 2.2590E-02 | -1.2088E-02 | 4.6487E-03 | -1.2834E-03 |
| 9 | 1.2166E-03 | -3.4562E-04 | 4.5237E-05 | 3.1477E-06 | -2.4151E-06 |
| 10 | 9.1777E-06 | 6.2535E-06 | -3.2907E-06 | 7.7856E-07 | -1.1043E-07 |
| 11 | 3.0400E-05 | 1.9105E-05 | -5.0146E-06 | 6.6192E-07 | -5.5309E-08 |
| 12 | -1.9508E-04 | 4.1164E-05 | -5.5954E-06 | 5.2435E-07 | -3.4476E-08 |
| 13 | -3.5450E-04 | 4.8877E-05 | -4.6844E-06 | 3.1909E-07 | -1.5565E-08 |
| 14 | -5.0305E-05 | 4.7282E-06 | -3.1707E-07 | 1.5361E-08 | -5.3827E-10 |

| Surface numeral | A22 | A24 | A26 | A28 | A30 |
|---|---|---|---|---|---|
| 1 | 0.0000E+00 | 0.0000E+00 | 0.0000E+00 | 0.0000E+00 | 0.0000E+00 |
| 2 | 0.0000E+00 | 0.0000E+00 | 0.0000E+00 | 0.0000E+00 | 0.0000E+00 |
| 3 | 0.0000E+00 | 0.0000E+00 | 0.0000E+00 | 0.0000E+00 | 0.0000E+00 |
| 4 | 0.0000E+00 | 0.0000E+00 | 0.0000E+00 | 0.0000E+00 | 0.0000E+00 |
| 5 | -1.0464E-01 | 2.5549E-02 | -4.1007E-03 | 3.8913E-04 | -1.6539E-05 |
| 6 | 8.1914E-02 | -1.9669E-02 | 3.1184E-03 | -2.9353E-04 | 1.2425E-05 |
| 7 | 7.3300E-02 | -1.6076E-02 | 2.3411E-03 | -2.0334E-04 | 7.9700E-06 |
| 8 | 2.5158E-04 | -3.4099E-05 | 3.0319E-06 | -1.5881E-07 | 3.7072E-09 |
| 9 | 4.6352E-07 | -4.8994E-08 | 3.0619E-09 | -1.0626E-10 | 1.5840E-12 |
| 10 | 1.0059E-08 | -5.9347E-10 | 2.1936E-11 | -4.6158E-13 | 4.2169E-15 |
| 11 | 3.0857E-09 | -1.1510E-10 | 2.7654E-12 | -3.8780E-14 | 2.4163E-16 |
| 12 | 1.5845E-09 | -4.9792E-11 | 1.0186E-12 | -1.2219E-14 | 6.5186E-17 |
| 13 | 5.3992E-10 | -1.3001E-11 | 2.0649E-13 | -1.9447E-15 | 8.2234E-18 |
| 14 | 1.3492E-11 | -2.3556E-13 | 2.7177E-15 | -1.8609E-17 | 5.7239E-20 |

Please refer to FIG. 6. From the longitudinal spherical aberration diagram in part (A) of FIG. 6, the astigmatism diagram in part (B) of FIG. 6, and the distortion curve in part (C) of FIG. 6, it can be seen that the longitudinal spherical aberration, astigmatism, and distortion of the optical lens 100 in the third embodiment are well controlled, thus the optical lens 100 of this embodiment has good imaging quality. In addition, the wavelengths corresponding to the curves in parts (A), (B), and (C) of FIG. 6 may refer to the description of parts (A), (B), and (C) in FIG. 2 in the first embodiment, which will not be repeated here.

### Fourth Embodiment

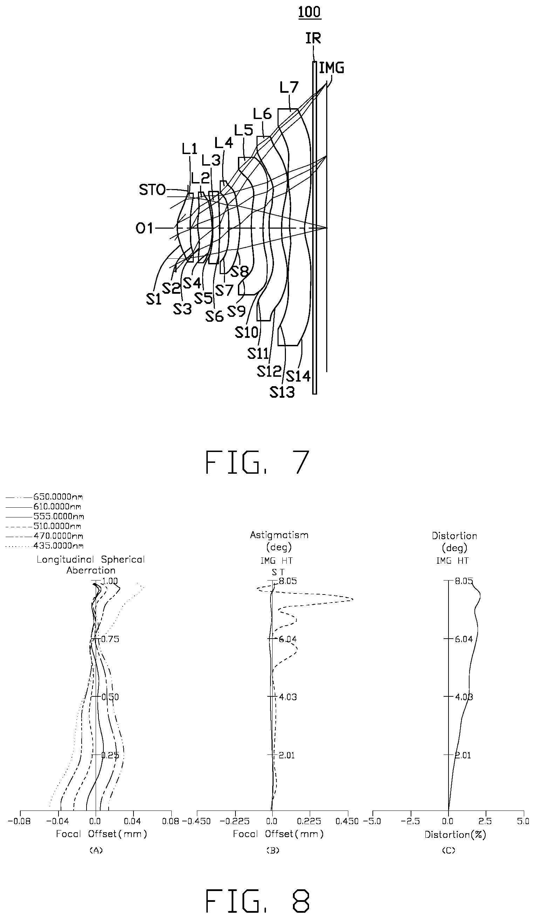

Referring to FIG. 7, a schematic structural diagram of an optical lens 100 disclosed in a fourth embodiment of the present disclosure is shown. The structure of the optical lens 100, the refractive power of each lens, and the surface shape of each lens may refer to the first embodiment. With the difference that in the fourth embodiment, the sixth lens L6 has positive refractive power. Other parameters in the fourth embodiment are given in the following Table 4a, and the definitions of each parameter can be derived from the description of the previous embodiment and will not be repeated here.

In the fourth embodiment, the object side surface and the image side surface of each lens are aspherical surfaces. Table 4b provides the conic constant k and the high-order coefficients A4, A6, A8, A10, A12, A14, A16, A18, A20, A22, A24, A26, A28, A30 that can be used for the aspherical lens surfaces in the fourth embodiment.

**Table 4a**

| Fourth embodiment | | | | | | | | |
|---|---|---|---|---|---|---|---|---|
| F=6.749mm, FNO=1.98, FOV=99.1°, TTL=8.259mm, ImgH=8.052mm | | | | | | | | |
| Surface numeral | Surface Name | Surface type | Curvature radius | Thickness | Material | Refractive index | Abbe number | Focal length |
| OBJ | Object side | sphere | Infinity | Infinity | | | | |
| STO | stop | sphere | Infinity | -0.449 | | | | |
| S1 | L1 | asphere | 2.802 | 0.671 | Plastic | 1.546 | 56.037 | 9.577 |
| S2 | | asphere | 5.527 | 0.461 | | | | |
| S3 | L2 | asphere | 19.426 | 0.758 | Plastic | 1.546 | 56.037 | 10.558 |
| S4 | | asphere | -8.082 | 0.030 | | | | |
| S5 | L3 | asphere | -11.939 | 0.360 | Plastic | 1.677 | 19.239 | -21.327 |
| S6 | | asphere | -69.838 | 0.538 | | | | |
| S7 | L4 | asphere | -13.830 | 0.587 | Plastic | 1.677 | 19.239 | 422.003 |
| S8 | | asphere | -13.418 | 0.670 | | | | |
| S9 | L5 | asphere | 13.604 | 0.666 | Plastic | 1.537 | 55.685 | 46.697 |
| S10 | | asphere | 29.255 | 0.328 | | | | |
| S11 | L6 | asphere | 6.622 | 0.688 | Plastic | 1.591 | 28.364 | 61.553 |
| S12 | | asphere | 7.782 | 0.449 | | | | |
| S13 | L7 | asphere | 9.254 | 0.827 | Plastic | 1.570 | 37.400 | -6.593 |
| S14 | | asphere | 2.586 | 0.484 | | | | |
| S15 | Filter IR | sphere | Infinity | 0.150 | Glass | 1.518 | 64.166 | |
| S16 | | sphere | Infinity | 0.592 | | | | |
| IMG | Imaging plane | sphere | Infinity | 0.000 | | | | |
| Reference wavelength: 555.0 nm | | | | | | | | |

**Table 4b**

| Aspherical coefficients of fourth embodiment | | | | | |
|---|---|---|---|---|---|
| Surface numeral | K | A4 | A6 | A8 | A10 |
| 1 | -1.4138E+01 | 7.6793E-02 | -5.7123E-02 | 4.7180E-02 | -3.4565E-02 |
| 2 | -9.2116E+01 | 6.2400E-02 | -8.2134E-02 | 9.3065E-02 | -8.3001E-02 |
| 3 | 5.7888E+01 | -9.6661E-03 | -2.9504E-03 | 2.5689E-03 | -2.1324E-03 |
| 4 | -2.3817E+01 | -2.8991E-02 | 1.4877E-03 | 6.0523E-03 | -8.0072E-03 |
| 5 | 1.2072E+01 | -1.4509E-02 | 3.6366E-02 | -1.5988E-01 | 4.6915E-01 |
| 6 | 9.9000E+01 | -3.9899E-04 | 1.4536E-02 | -7.0248E-02 | 1.9548E-01 |
| 7 | -3.9645E+00 | -2.1394E-02 | 5.3120E-02 | -2.1482E-01 | 5.2944E-01 |
| 8 | -1.3133E+01 | -1.2244E-02 | 7.4359E-03 | -2.2071E-02 | 3.2708E-02 |
| 9 | 5.8380E+00 | 1.4055E-02 | -3.3835E-03 | -2.8183E-03 | 2.8488E-03 |
| 10 | 3.3545E+01 | 2.7399E-02 | -7.0339E-03 | -2.8531E-05 | 5.9213E-04 |
| 11 | -4.6371E+01 | 3.8349E-02 | -2.1416E-02 | 6.1009E-03 | -1.3240E-03 |
| 12 | -3.6808E+01 | 3.4387E-02 | -1.2860E-02 | 1.4595E-03 | 2.4951E-04 |
| 13 | -9.8054E+01 | -3.1686E-02 | 1.4428E-02 | -6.3573E-03 | 2.0256E-03 |
| 14 | -8.0370E+00 | -2.1551E-02 | 6.5480E-03 | -1.8900E-03 | 3.9058E-04 |

| Surface numeral | A12 | A14 | A16 | A18 | A20 |
|---|---|---|---|---|---|
| 1 | 1.9256E-02 | -7.5401E-03 | 1.9073E-03 | -2.7747E-04 | 1.7596E-05 |
| 2 | 5.1982E-02 | -2.1836E-02 | 5.8115E-03 | -8.7872E-04 | 5.7271E-05 |
| 3 | 1.2818E-03 | -5.2844E-04 | 1.7648E-04 | -3.7124E-05 | 3.0257E-06 |
| 4 | 6.0935E-03 | -2.9849E-03 | 9.1083E-04 | -1.5865E-04 | 1.2024E-05 |
| 5 | -9.3731E-01 | 1.3137E+00 | -1.3179E+00 | 9.5588E-01 | -5.0136E-01 |
| 6 | -3.7456E-01 | 5.0479E-01 | -4.8678E-01 | 3.3904E-01 | -1.7061E-01 |
| 7 | -8.7968E-01 | 1.0244E+00 | -8.5586E-01 | 5.1912E-01 | -2.2887E-01 |
| 8 | -3.2637E-02 | 2.3183E-02 | -1.1906E-02 | 4.4407E-03 | -1.1989E-03 |
| 9 | -1.9044E-03 | 9.4504E-04 | -3.3848E-04 | 8.6157E-05 | -1.5470E-05 |
| 10 | -2.6788E-04 | 7.5453E-05 | -1.5076E-05 | 2.1879E-06 | -2.3006E-07 |
| 11 | 2.0936E-04 | -2.1659E-05 | 1.2098E-06 | 1.0761E-09 | -5.8056E-09 |
| 12 | -1.3752E-04 | 3.0244E-05 | -4.2457E-06 | 4.1117E-07 | -2.7919E-08 |
| 13 | -4.1811E-04 | 5.7698E-05 | -5.5298E-06 | 3.7663E-07 | -1.8374E-08 |
| 14 | -5.4195E-05 | 5.1750E-06 | -3.4929E-07 | 1.6922E-08 | -5.9031E-10 |

| Surface numeral | A22 | A24 | A26 | A28 | A30 |
|---|---|---|---|---|---|
| 1 | 0.0000E+00 | 0.0000E+00 | 0.0000E+00 | 0.0000E+00 | 0.0000E+00 |
| 2 | 0.0000E+00 | 0.0000E+00 | 0.0000E+00 | 0.0000E+00 | 0.0000E+00 |
| 3 | 0.0000E+00 | 0.0000E+00 | 0.0000E+00 | 0.0000E+00 | 0.0000E+00 |
| 4 | 0.0000E+00 | 0.0000E+00 | 0.0000E+00 | 0.0000E+00 | 0.0000E+00 |
| 5 | 1.8810E-01 | -4.9168E-02 | 8.4973E-03 | -8.7208E-04 | 4.0220E-05 |
| 6 | 6.1379E-02 | -1.5382E-02 | 2.5495E-03 | -2.5115E-04 | 1.1133E-05 |
| 7 | 7.2579E-02 | -1.6126E-02 | 2.3821E-03 | -2.1009E-04 | 8.3688E-06 |
| 8 | 2.3119E-04 | -3.0942E-05 | 2.7224E-06 | -1.4116E-07 | 3.2589E-09 |
| 9 | 1.9369E-06 | -1.6498E-07 | 9.0955E-09 | -2.9230E-10 | 4.1547E-12 |
| 10 | 1.7234E-08 | -8.9123E-10 | 3.0092E-11 | -5.9485E-13 | 5.2078E-15 |
| 11 | 4.7572E-10 | -2.0274E-11 | 5.0373E-13 | -6.8980E-15 | 4.0219E-17 |
| 12 | 1.3223E-09 | -4.2708E-11 | 8.9564E-13 | -1.0988E-14 | 5.9850E-17 |
| 13 | 6.3780E-10 | -1.5377E-11 | 2.4471E-13 | -2.3104E-15 | 9.8001E-18 |
| 14 | 1.4691E-11 | -2.5424E-13 | 2.9052E-15 | -1.9696E-17 | 5.9975E-20 |

Please refer to FIG. 8. From the longitudinal spherical aberration diagram in part (A) of FIG. 8, the astigmatism diagram in part (B) of FIG. 8, and the distortion curve in part (C) of FIG. 8, it can be seen that the longitudinal spherical aberration, astigmatism, and distortion of the optical lens 100 in the fourth embodiment are well controlled, thus the optical lens 100 of this embodiment has good imaging quality. In addition, the wavelengths corresponding to the curves in parts (A), (B), and (C) of FIG. 8 may refer to the description of parts (A), (B), and (C) in FIG. 2 in the first embodiment, which will not be repeated here

### Fifth Embodiment

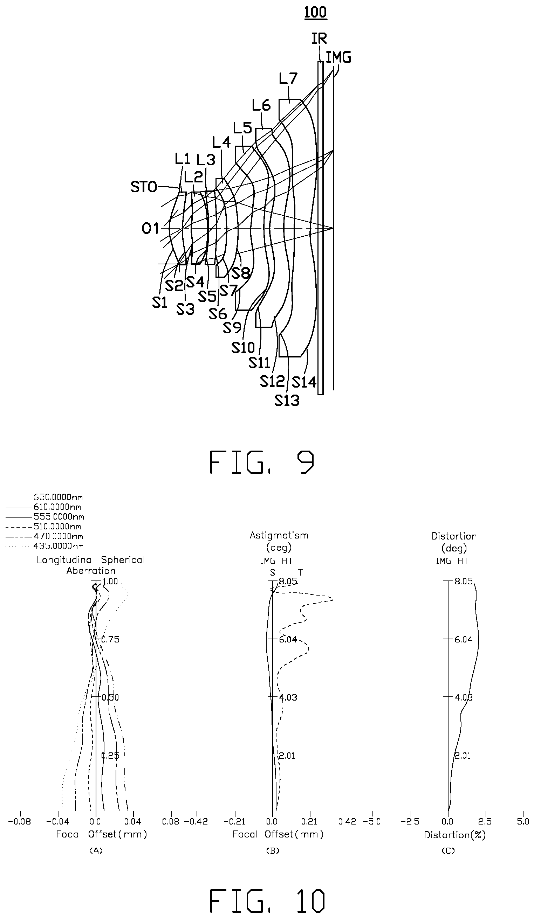

Referring to FIG. 9, a schematic structural diagram of an optical lens 100 disclosed in a fifth embodiment of the present disclosure is shown. The structure of the optical lens 100, the refractive power of each lens, and the surface shape of each lens may refer to the first embodiment. With the difference that in the fifth embodiment, the sixth lens L6 has positive refractive power. Other parameters in the fifth embodiment are given in the following Table 5a, and the definitions of each parameter can be derived from the description of the previous embodiment and will not be repeated here.

In the fifth embodiment, the object side surface and the image side surface of each lens are aspherical surfaces. Table 5b provides the conic constant k and the high-order coefficients A4, A6, A8, A10, A12, A14, A16, A18, A20, A22, A24, A26, A28, A30 that can be used for the aspherical lens surfaces in the fifth embodiment.

**Table 5a**

| Fifth embodiment | | | | | | | | |
|---|---|---|---|---|---|---|---|---|
| F=6.805mm, FNO=1.89, FOV=98.7°, TTL=8.28mm, ImgH=8.052mm | | | | | | | | |
| Surface numeral | Surface Name | Surface type | Curvature radius | Thickness | Material | Refractive index | Abbe number | Focal length |
| OBJ | Object side | sphere | Infinity | Infinity | | | | |
| STO | stop | sphere | Infinity | -0.414 | | | | |
| S1 | L1 | asphere | 2.805 | 0.660 | Plastic | 1.546 | 56.037 | 9.672 |
| S2 | | asphere | 5.485 | 0.456 | | | | |
| S3 | L2 | asphere | 19.329 | 0.815 | Plastic | 1.546 | 56.037 | 10.556 |
| S4 | | asphere | -8.089 | 0.030 | | | | |
| S5 | L3 | asphere | -13.303 | 0.360 | Plastic | 1.677 | 19.239 | -22.594 |
| S6 | | asphere | -103.223 | 0.536 | | | | |
| S7 | L4 | asphere | -10.860 | 0.580 | Plastic | 1.677 | 19.239 | 276.392 |
| S8 | | asphere | -10.485 | 0.678 | | | | |
| S9 | L5 | asphere | 14.628 | 0.646 | Plastic | 1.537 | 55.685 | 50.749 |
| S10 | | asphere | 31.120 | 0.318 | | | | |
| S11 | L6 | asphere | 6.681 | 0.675 | Plastic | 1.591 | 28.364 | 97.351 |
| S12 | | asphere | 7.275 | 0.478 | | | | |
| S13 | L7 | asphere | 8.066 | 0.780 | Plastic | 1.570 | 37.400 | -6.847 |
| S14 | | asphere | 2.537 | 0.475 | | | | |
| S15 | Filter IR | sphere | Infinity | 0.210 | Glass | 1.518 | 64.166 | |
| S16 | | sphere | Infinity | 0.582 | | | | |
| IMG | Imaging plane | sphere | Infinity | 0.000 | | | | |
| Reference wavelength: 555.0 nm | | | | | | | | |

**Table 5b**

| Aspherical coefficients of fifth embodiment | | | | | |
|---|---|---|---|---|---|
| Surface numeral | K | A4 | A6 | A8 | A10 |
| 1 | -1.4151E+01 | 7.6076E-02 | -5.4584E-02 | 4.1664E-02 | -2.7157E-02 |
| 2 | -9.4039E+01 | 6.4403E-02 | -8.2295E-02 | 8.8210E-02 | -7.2814E-02 |
| 3 | 6.0275E+01 | -8.3080E-03 | -5.1115E-03 | 7.3356E-03 | -8.6482E-03 |
| 4 | -2.2816E+01 | -3.7836E-02 | 2.5270E-02 | -2.9290E-02 | 2.6242E-02 |
| 5 | 5.8060E+00 | -2.3618E-02 | 4.8824E-02 | -1.3722E-01 | 3.2126E-01 |
| 6 | -9.1542E-01 | -3.9703E-03 | 3.1689E-02 | -1.3304E-01 | 3.5837E-01 |
| 7 | -8.6806E+00 | -1.5881E-02 | 5.9571E-03 | -3.1874E-02 | 9.4326E-02 |
| 8 | -1.0297E+01 | -1.0651E-02 | -6.9082E-03 | 1.6910E-02 | -2.9530E-02 |
| 9 | 3.4383E+00 | 1.5561E-02 | -9.1290E-03 | 7.6310E-03 | -8.5496E-03 |
| 10 | 3.2276E+01 | 2.5937E-02 | 2.2061E-04 | -7.6789E-03 | 4.6710E-03 |
| 11 | -5.1072E+01 | 3.1144E-02 | -1.0915E-02 | -1.4613E-03 | 1.8042E-03 |
| 12 | -4.2604E+01 | 2.7603E-02 | -5.2866E-03 | -3.2095E-03 | 2.0450E-03 |
| 13 | -9.9000E+01 | -2.6379E-02 | 8.9269E-03 | -2.8606E-03 | 8.0402E-04 |
| 14 | -6.8484E+00 | -2.4159E-02 | 6.4580E-03 | -1.3631E-03 | 2.1002E-04 |

| Surface numeral | A12 | A14 | A16 | A18 | A20 |
|---|---|---|---|---|---|
| 1 | 1.3093E-02 | -4.3668E-03 | 9.2620E-04 | -1.1114E-04 | 5.7367E-06 |
| 2 | 4.1696E-02 | -1.5909E-02 | 3.8244E-03 | -5.1882E-04 | 3.0133E-05 |
| 3 | 6.6581E-03 | -3.2593E-03 | 9.9258E-04 | -1.6772E-04 | 1.1821E-05 |
| 4 | -1.6119E-02 | 6.5051E-03 | -1.6378E-03 | 2.3179E-04 | -1.4007E-05 |
| 5 | -5.7252E-01 | 7.4962E-01 | -7.1625E-01 | 4.9919E-01 | -2.5278E-01 |
| 6 | -6.6002E-01 | 8.4969E-01 | -7.8045E-01 | 5.1758E-01 | -2.4829E-01 |
| 7 | -1.9043E-01 | 2.6490E-01 | -2.5926E-01 | 1.8108E-01 | -9.0664E-02 |
| 8 | 3.2868E-02 | -2.4573E-02 | 1.2886E-02 | -4.8515E-03 | 1.3216E-03 |
| 9 | 5.9014E-03 | -2.6188E-03 | 7.9222E-04 | -1.6873E-04 | 2.5626E-05 |
| 10 | -1.6231E-03 | 3.8158E-04 | -6.4156E-05 | 7.8912E-06 | -7.1351E-07 |
| 11 | -6.0702E-04 | 1.2187E-04 | -1.6479E-05 | 1.5582E-06 | -1.0393E-07 |
| 12 | -5.8757E-04 | 1.0678E-04 | -1.3357E-05 | 1.1850E-06 | -7.5115E-08 |
| 13 | -1.6023E-04 | 2.1994E-05 | -2.1220E-06 | 1.4637E-07 | -7.2526E-09 |
| 14 | -2.2931E-05 | 1.8009E-06 | -1.0367E-07 | 4.4166E-09 | -1.3899E-10 |

| Surface numeral | A22 | A24 | A26 | A28 | A30 |
|---|---|---|---|---|---|
| 1 | 0.0000E+00 | 0.0000E+00 | 0.0000E+00 | 0.0000E+00 | 0.0000E+00 |
| 2 | 0.0000E+00 | 0.0000E+00 | 0.0000E+00 | 0.0000E+00 | 0.0000E+00 |
| 3 | 0.0000E+00 | 0.0000E+00 | 0.0000E+00 | 0.0000E+00 | 0.0000E+00 |
| 4 | 0.0000E+00 | 0.0000E+00 | 0.0000E+00 | 0.0000E+00 | 0.0000E+00 |
| 5 | 9.1827E-02 | -2.3284E-02 | 3.9086E-03 | -3.8994E-04 | 1.7490E-05 |
| 6 | 8.5313E-02 | -2.0465E-02 | 3.2543E-03 | -3.0821E-04 | 1.3161E-05 |
| 7 | 3.2284E-02 | -7.9779E-03 | 1.2999E-03 | -1.2551E-04 | 5.4362E-06 |
| 8 | -2.5880E-04 | 3.5580E-05 | -3.2654E-06 | 1.7987E-07 | -4.5006E-09 |
| 9 | -2.7664E-06 | 2.0772E-07 | -1.0326E-08 | 3.0572E-10 | -4.0829E-12 |
| 10 | 4.6926E-08 | -2.1818E-09 | 6.7830E-11 | -1.2620E-12 | 1.0600E-14 |
| 11 | 4.8389E-09 | -1.5257E-10 | 3.0640E-12 | -3.4585E-14 | 1.5981E-16 |
| 12 | 3.3748E-09 | -1.0482E-10 | 2.1378E-12 | -2.5738E-14 | 1.3851E-16 |
| 13 | 2.5598E-10 | -6.2755E-12 | 1.0148E-13 | -9.7292E-16 | 4.1880E-18 |
| 14 | 3.1837E-12 | -5.1481E-14 | 5.5556E-16 | -3.5832E-18 | 1.0432E-20 |

Please refer to FIG. 10. From the longitudinal spherical aberration diagram in part (A) of FIG. 10, the astigmatism diagram in part (B) of FIG. 10, and the distortion curve in part (C) of FIG. 10, it can be seen that the longitudinal spherical aberration, astigmatism, and distortion of the optical lens 100 in the fifth embodiment are well controlled, thus the optical lens 100 of this embodiment has good imaging quality. In addition, the wavelengths corresponding to the curves in parts (A), (B), and (C) of FIG. 10 may refer to the description of parts (A), (B), and (C) in FIG. 2 in the first embodiment, which will not be repeated here.

### Sixth Embodiment

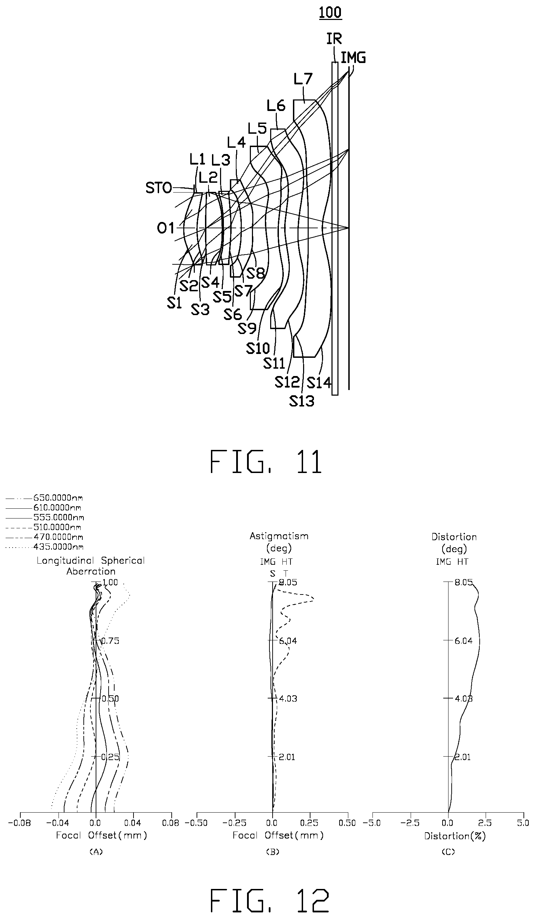

Referring to FIG. 11, a schematic structural diagram of an optical lens 100 disclosed in a sixth embodiment of the present disclosure is shown. The structure of the optical lens 100, the refractive power of each lens, and the surface shape of each lens may refer to the first embodiment. With the difference that in the sixth embodiment, the sixth lens L6 has positive refractive power. Other parameters in the sixth embodiment are given in the following Table 6a, and the definitions of each parameter can be derived from the description of the previous embodiment and will not be repeated here.

In the sixth embodiment, the object side surface and the image side surface of each lens are aspherical surfaces. Table 6b provides the conic constant k and the high-order coefficients A4, A6, A8, A10, A12, A14, A16, A18, A20, A22, A24, A26, A28, A30 that can be used for the aspherical lens surfaces in the sixth embodiment.

**Table 6a**

| sixth embodiment | | | | | | | | |
|---|---|---|---|---|---|---|---|---|
| F=6.760mm, FNO=1.87, FOV=99°, TTL=8.28mm, ImgH=8.052mm | | | | | | | | |
| Surface numeral | Surface Name | Surface type | Curvature radius | Thickness | Material | Refractive index | Abbe number | Focal length |
| OBJ | Object side | sphere | Infinity | Infinity | | | | |
| STO | stop | sphere | Infinity | -0.421 | | | | |
| S1 | L1 | asphere | 2.822 | 0.675 | Plastic | 1.546 | 56.037 | 9.686 |
| S2 | | asphere | 5.539 | 0.453 | | | | |
| S3 | L2 | asphere | 19.190 | 0.807 | Plastic | 1.546 | 56.037 | 10.499 |
| S4 | | asphere | -8.052 | 0.030 | | | | |
| S5 | L3 | asphere | -13.060 | 0.360 | Plastic | 1.677 | 19.239 | -22.224 |
| S6 | | asphere | -100.130 | 0.535 | | | | |
| S7 | L4 | asphere | -11.322 | 0.580 | Plastic | 1.677 | 19.239 | 338.970 |
| S8 | | asphere | -11.012 | 0.672 | | | | |
| S9 | L5 | asphere | 14.250 | 0.650 | Plastic | 1.537 | 55.685 | 49.203 |
| S10 | | asphere | 30.469 | 0.324 | | | | |
| S11 | L6 | asphere | 6.854 | 0.674 | Plastic | 1.591 | 28.364 | 58.334 |
| S12 | | asphere | 8.241 | 0.456 | | | | |
| S13 | L7 | asphere | 7.753 | 0.780 | Plastic | 1.570 | 37.400 | -6.575 |
| S14 | | asphere | 2.434 | 0.483 | | | | |
| S15 | Filter IR | sphere | Infinity | 0.210 | Glass | 1.518 | 64.166 | |
| S16 | | sphere | Infinity | 0.591 | | | | |

| | | | | | | | | |
|---|---|---|---|---|---|---|---|---|
| IMG | Imaging plane | sphere | Infinity | 0.000 | | | | |
| Reference wavelength: 555.0 nm | | | | | | | | |

**Table 6b**

| Aspherical coefficients of sixth embodiment | | | | | |
|---|---|---|---|---|---|
| Surface numeral | K | A4 | A6 | A8 | A10 |
| 1 | -1.4336E+01 | 7.5393E-02 | -5.3473E-02 | 3.9886E-02 | -2.5331E-02 |
| 2 | -9.3890E+01 | 6.2754E-02 | -7.9941E-02 | 8.5880E-02 | -7.1246E-02 |
| 3 | 6.0304E+01 | -8.5528E-03 | -3.7529E-03 | 4.4257E-03 | -4.9246E-03 |
| 4 | -2.4352E+01 | -3.5938E-02 | 2.1423E-02 | -2.4609E-02 | 2.2663E-02 |
| 5 | 6.4271E+00 | -2.3123E-02 | 5.5811E-02 | -1.7490E-01 | 4.2028E-01 |
| 6 | 9.9000E+01 | -3.2671E-03 | 2.6379E-02 | -1.0779E-01 | 2.8295E-01 |
| 7 | -8.3733E+00 | -1.8596E-02 | 2.5545E-02 | -1.0134E-01 | 2.4520E-01 |
| 8 | -1.0659E+01 | -1.0279E-02 | -8.1587E-03 | 2.0549E-02 | -3.6562E-02 |
| 9 | 4.2111E+00 | 1.6434E-02 | -1.0693E-02 | 9.1750E-03 | -9.3105E-03 |
| 10 | 3.3078E+01 | 2.7289E-02 | -4.3983E-03 | -2.8700E-03 | 1.9850E-03 |
| 11 | -5.0275E+01 | 3.3952E-02 | -1.5685E-02 | 1.9825E-03 | 4.4025E-04 |
| 12 | -4.2982E+01 | 2.9020E-02 | -7.4638E-03 | -1.7861E-03 | 1.5264E-03 |
| 13 | -9.9000E+01 | -2.8974E-02 | 1.2298E-02 | -4.7202E-03 | 1.3742E-03 |
| 14 | -6.8278E+00 | -2.7238E-02 | 9.0136E-03 | -2.2692E-03 | 3.9626E-04 |

| Surface numeral | A12 | A14 | A16 | A18 | A20 |
|---|---|---|---|---|---|
| 1 | 1.1934E-02 | -3.9080E-03 | 8.1654E-04 | -9.6630E-05 | 4.9090E-06 |
| 2 | 4.0998E-02 | -1.5702E-02 | 3.7848E-03 | -5.1426E-04 | 2.9864E-05 |
| 3 | 3.7498E-03 | -1.8561E-03 | 5.8438E-04 | -1.0209E-04 | 7.3227E-06 |
| 4 | -1.4318E-02 | 5.9045E-03 | -1.5088E-03 | 2.1552E-04 | -1.3101E-05 |
| 5 | -7.3570E-01 | 9.3089E-01 | -8.5563E-01 | 5.7360E-01 | -2.7981E-01 |
| 6 | -5.1354E-01 | 6.5580E-01 | -5.9973E-01 | 3.9680E-01 | -1.9012E-01 |
| 7 | -4.0717E-01 | 4.7948E-01 | -4.0860E-01 | 2.5438E-01 | -1.1567E-01 |
| 8 | 4.1385E-02 | -3.1381E-02 | 1.6631E-02 | -6.3020E-03 | 1.7199E-03 |
| 9 | 6.0598E-03 | -2.6008E-03 | 7.7274E-04 | -1.6337E-04 | 2.4823E-05 |
| 10 | -6.7310E-04 | 1.5237E-04 | -2.4943E-05 | 3.0443E-06 | -2.7876E-07 |
| 11 | -2.6913E-04 | 6.5620E-05 | -9.9290E-06 | 1.0149E-06 | -7.1751E-08 |
| 12 | -4.6913E-04 | 8.8763E-05 | -1.1469E-05 | 1.0467E-06 | -6.8035E-08 |
| 13 | -2.7040E-04 | 3.6384E-05 | -3.4442E-06 | 2.3355E-07 | -1.1402E-08 |
| 14 | -4.7860E-05 | 4.1050E-06 | -2.5543E-07 | 1.1648E-08 | -3.8889E-10 |

| Surface numeral | A22 | A24 | A26 | A28 | A30 |
|---|---|---|---|---|---|
| 1 | 0.0000E+00 | 0.0000E+00 | 0.0000E+00 | 0.0000E+00 | 0.0000E+00 |
| 2 | 0.0000E+00 | 0.0000E+00 | 0.0000E+00 | 0.0000E+00 | 0.0000E+00 |
| 3 | 0.0000E+00 | 0.0000E+00 | 0.0000E+00 | 0.0000E+00 | 0.0000E+00 |
| 4 | 0.0000E+00 | 0.0000E+00 | 0.0000E+00 | 0.0000E+00 | 0.0000E+00 |
| 5 | 9.8127E-02 | -2.4074E-02 | 3.9187E-03 | -3.7991E-04 | 1.6591E-05 |
| 6 | 6.5279E-02 | -1.5651E-02 | 2.4872E-03 | -2.3536E-04 | 1.0038E-05 |
| 7 | 3.7964E-02 | -8.7505E-03 | 1.3426E-03 | -1.2302E-04 | 5.0879E-06 |
| 8 | -3.3571E-04 | 4.5767E-05 | -4.1424E-06 | 2.2383E-07 | -5.4666E-09 |
| 9 | -2.6955E-06 | 2.0432E-07 | -1.0271E-08 | 3.0758E-10 | -4.1504E-12 |
| 10 | 1.8887E-08 | -9.1462E-10 | 2.9758E-11 | -5.7936E-13 | 5.0754E-15 |
| 11 | 3.5002E-09 | -1.1495E-10 | 2.4041E-12 | -2.8489E-14 | 1.4176E-16 |
| 12 | 3.1257E-09 | -9.9046E-11 | 2.0574E-12 | -2.5195E-14 | 1.3782E-16 |
| 13 | 3.9730E-10 | -9.6350E-12 | 1.5442E-13 | -1.4696E-15 | 6.2882E-18 |
| 14 | 9.3843E-12 | -1.5911E-13 | 1.7962E-15 | -1.2114E-17 | 3.6911E-20 |

Please refer to FIG. 12. From the longitudinal spherical aberration diagram in part (A) of FIG. 12, the astigmatism diagram in part (B) of FIG. 12, and the distortion curve in part (C) of FIG. 12, it can be seen that the longitudinal spherical aberration, astigmatism, and distortion of the optical lens 100 in the sixth embodiment are well controlled, thus the optical lens 100 of this embodiment has good imaging quality. In addition, the wavelengths corresponding to the curves in parts (A), (B), and (C) of FIG. 12 may refer to the description of parts (A), (B), and (C) in FIG. 2 in the first embodiment, which will not be repeated here.

### Seventh Embodiment

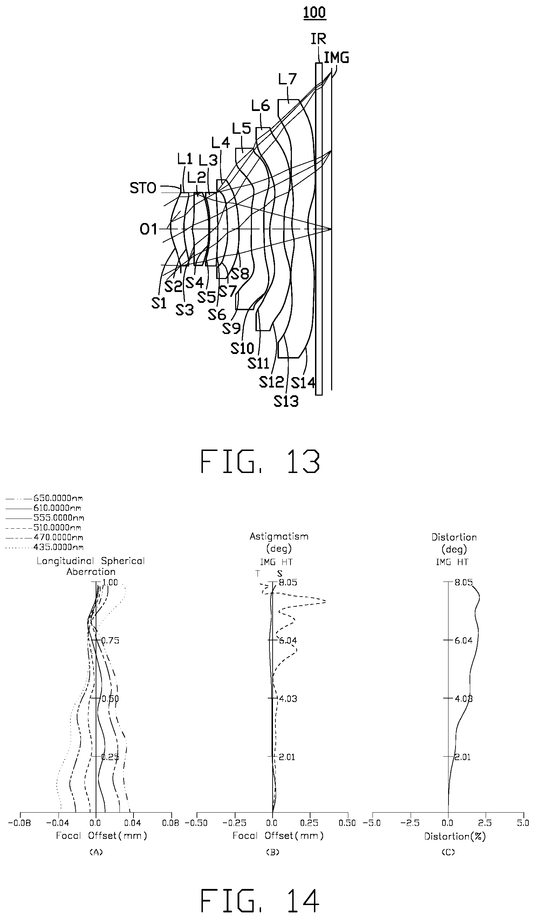

Referring to FIG. 13, a schematic structural diagram of an optical lens 100 disclosed in a seventh embodiment of the present disclosure is shown. The structure of the optical lens 100, the refractive power of each lens, and the surface shape of each lens may refer to the first embodiment. With the difference that in the seventh embodiment, the sixth lens L6 has positive refractive power. Other parameters in the seventh embodiment are given in the following Table 7a, and the definitions of each parameter can be derived from the description of the previous embodiment and will not be repeated here.

In the seventh embodiment, the object side surface and the image side surface of each lens are aspherical surfaces. Table 7b provides the conic constant k and the high-order coefficients A4, A6, A8, A10, A12, A14, A16, A18, A20, A22, A24, A26, A28, A30 that can be used for the aspherical lens surfaces in the seventh embodiment.

**Table 7a**

| Seventh embodiment | | | | | | | | |
|---|---|---|---|---|---|---|---|---|
| F=6.7mm, FNO=1.85, FOV=99.7°, TTL=8.18mm, ImgH=8.052mm | | | | | | | | |
| Surface numeral | Surface Name | Surface type | Curvature radius | Thickness | Material | Refractive index | Abbe number | Focal length |
| OBJ | Object side | sphere | Infinity | Infinity | | | | |
| STO | stop | sphere | Infinity | -0.483 | | | | |
| S1 | L1 | asphere | 2.799 | 0.684 | Plastic | 1.546 | 56.307 | 9.538 |
| S2 | | asphere | 5.529 | 0.465 | | | | |
| S3 | L2 | asphere | 18.875 | 0.774 | Plastic | 1.546 | 56.037 | 10.977 |
| S4 | | asphere | -8.653 | 0.030 | | | | |
| S5 | L3 | asphere | -14.560 | 0.360 | Plastic | 1.677 | 19.239 | -24.449 |
| S6 | | asphere | -122.308 | 0.533 | | | | |
| S7 | L4 | asphere | -13.037 | 0.580 | Plastic | 1.677 | 19.239 | 723.229 |
| S8 | | asphere | -12.927 | 0.640 | | | | |
| S9 | L5 | asphere | 13.828 | 0.659 | Plastic | 1.537 | 55.685 | 47.958 |
| S10 | | asphere | 29.395 | 0.316 | | | | |
| S11 | L6 | asphere | 6.087 | 0.671 | Plastic | 1.591 | 28.364 | 69.049 |
| S12 | | asphere | 6.861 | 0.460 | | | | |
| S13 | L7 | asphere | 8.207 | 0.780 | Plastic | 1.570 | 37.400 | -6.581 |
| S14 | | asphere | 2.485 | 0.456 | | | | |
| S15 | Filter IR | sphere | Infinity | 0.210 | Glass | 1.518 | 64.166 | |
| S16 | | sphere | Infinity | 0.563 | | | | |
| IMG | Imaging plane | sphere | Infinity | 0.000 | | | | |
| Reference wavelength: 555.0 nm | | | | | | | | |

**Table 7b**

| Aspherical coefficients of seventh embodiment | | | | | |
|---|---|---|---|---|---|
| Surface numeral | K | A4 | A6 | A8 | A10 |
| 1 | -1.4087E+01 | 7.6484E-02 | -5.5313E-02 | 4.2792E-02 | -2.8190E-02 |
| 2 | -9.0184E+01 | 6.0805E-02 | -7.5257E-02 | 7.8933E-02 | -6.4084E-02 |
| 3 | 6.3410E+01 | -8.4880E-03 | -4.7675E-03 | 6.9672E-03 | -8.2742E-03 |
| 4 | -2.9244E+01 | -3.2713E-02 | 1.6038E-02 | -1.5313E-02 | 1.1710E-02 |
| 5 | 9.7477E+00 | -1.1907E-02 | -1.7938E-02 | 1.5015E-01 | -4.9628E-01 |
| 6 | -9.9000E+01 | -2.4513E-03 | 2.7142E-02 | -1.3136E-01 | 3.8166E-01 |
| 7 | -7.6679E+00 | -2.0120E-02 | 4.3134E-02 | -1.8015E-01 | 4.5693E-01 |
| 8 | -1.4606E+01 | -1.0914E-02 | 1.4227E-03 | -9.1110E-03 | 1.5181E-02 |
| 9 | 6.2527E+00 | 1.7496E-02 | -1.1210E-02 | 7.6199E-03 | -6.0457E-03 |
| 10 | 3.3129E+01 | 2.7673E-02 | -8.8958E-03 | 2.5100E-03 | -1.0631E-03 |
| 11 | -4.7269E+01 | 3.8348E-02 | -2.1706E-02 | 6.0770E-03 | -1.1779E-03 |
| 12 | -3.5260E+01 | 3.3999E-02 | -1.2538E-02 | 1.1911E-03 | 4.0207E-04 |
| 13 | -9.9000E+01 | -3.2199E-02 | 1.4237E-02 | -5.8548E-03 | 1.7872E-03 |
| 14 | -8.0508E+00 | -2.3317E-02 | 7.1872E-03 | -1.9829E-03 | 3.9120E-04 |

| Surface numeral | A12 | A14 | A16 | A18 | A20 |
|---|---|---|---|---|---|
| 1 | 1.3704E-02 | -4.5991E-03 | 9.8230E-04 | -1.1921E-04 | 6.2660E-06 |
| 2 | 3.6010E-02 | -1.3449E-02 | 3.1562E-03 | -4.1674E-04 | 2.3472E-05 |
| 3 | 6.3476E-03 | -3.0450E-03 | 8.9825E-04 | -1.4585E-04 | 9.7732E-06 |
| 4 | -6.2641E-03 | 2.2503E-03 | -5.1583E-04 | 6.7514E-05 | -3.8133E-06 |
| 5 | 9.9854E-01 | -1.3524E+00 | 1.2841E+00 | -8.7053E-01 | 4.2323E-01 |
| 6 | -7.3233E-01 | 9.6321E-01 | -8.9342E-01 | 5.9379E-01 | -2.8395E-01 |
| 7 | -7.7855E-01 | 9.2539E-01 | -7.8568E-01 | 4.8244E-01 | -2.1466E-01 |
| 8 | -1.6754E-02 | 1.3184E-02 | -7.4214E-03 | 2.9892E-03 | -8.5948E-04 |
| 9 | 3.1503E-03 | -1.0599E-03 | 2.3270E-04 | -3.2259E-05 | 2.4004E-06 |
| 10 | 3.7342E-04 | -8.7586E-05 | 1.3561E-05 | -1.3783E-06 | 8.7544E-08 |
| 11 | 1.3445E-04 | -1.8101E-06 | -2.1082E-06 | 3.7635E-07 | -3.5309E-08 |
| 12 | -1.8656E-04 | 3.9836E-05 | -5.4669E-06 | 5.1651E-07 | -3.4195E-08 |
| 13 | -3.6047E-04 | 4.9057E-05 | -4.6578E-06 | 3.1506E-07 | -1.5286E-08 |
| 14 | -5.2427E-05 | 4.8852E-06 | -3.2443E-07 | 1.5565E-08 | -5.4042E-10 |

| Surface numeral | A22 | A24 | A26 | A28 | A30 |
|---|---|---|---|---|---|
| 1 | 0.0000E+00 | 0.0000E+00 | 0.0000E+00 | 0.0000E+00 | 0.0000E+00 |
| 2 | 0.0000E+00 | 0.0000E+00 | 0.0000E+00 | 0.0000E+00 | 0.0000E+00 |
| 3 | 0.0000E+00 | 0.0000E+00 | 0.0000E+00 | 0.0000E+00 | 0.0000E+00 |
| 4 | 0.0000E+00 | 0.0000E+00 | 0.0000E+00 | 0.0000E+00 | 0.0000E+00 |
| 5 | -1.4630E-01 | 3.5068E-02 | -5.5378E-03 | 5.1786E-04 | -2.1716E-05 |
| 6 | 9.6883E-02 | -2.3009E-02 | 3.6139E-03 | -3.3749E-04 | 1.4190E-05 |
| 7 | 6.8530E-02 | -1.5297E-02 | 2.2663E-03 | -2.0015E-04 | 7.9726E-06 |
| 8 | 1.7450E-04 | -2.4374E-05 | 2.2234E-06 | -1.1898E-07 | 2.8269E-09 |
| 9 | -2.6559E-09 | -1.7741E-08 | 1.6867E-09 | -7.0631E-11 | 1.1732E-12 |
| 10 | -2.8664E-09 | -8.3183E-12 | 4.5010E-12 | -1.5462E-13 | 1.8021E-15 |
| 11 | 2.0929E-09 | -8.0965E-11 | 1.9915E-12 | -2.8375E-14 | 1.7874E-16 |
| 12 | 1.5807E-09 | -4.9919E-11 | 1.0256E-12 | -1.2350E-14 | 6.6123E-17 |
| 13 | 5.2807E-10 | -1.2676E-11 | 2.0084E-13 | -1.8881E-15 | 7.9733E-18 |
| 14 | 1.3434E-11 | -2.3283E-13 | 2.6692E-15 | -1.8178E-17 | 5.5647E-20 |

Please refer to FIG. 14. From the longitudinal spherical aberration diagram in part (A) of FIG. 14, the astigmatism diagram in part (B) of FIG. 14, and the distortion curve in part (C) of FIG. 14, it can be seen that the longitudinal spherical aberration, astigmatism, and distortion of the optical lens 100 in the seventh embodiment are well controlled, thus the optical lens 100 of this embodiment has good imaging quality. In addition, the wavelengths corresponding to the curves in parts (A), (B), and (C) of FIG. 14 may refer to the description of parts (A), (B), and (C) in FIG. 2 in the first embodiment, which will not be repeated here.

### Eighth Embodiment

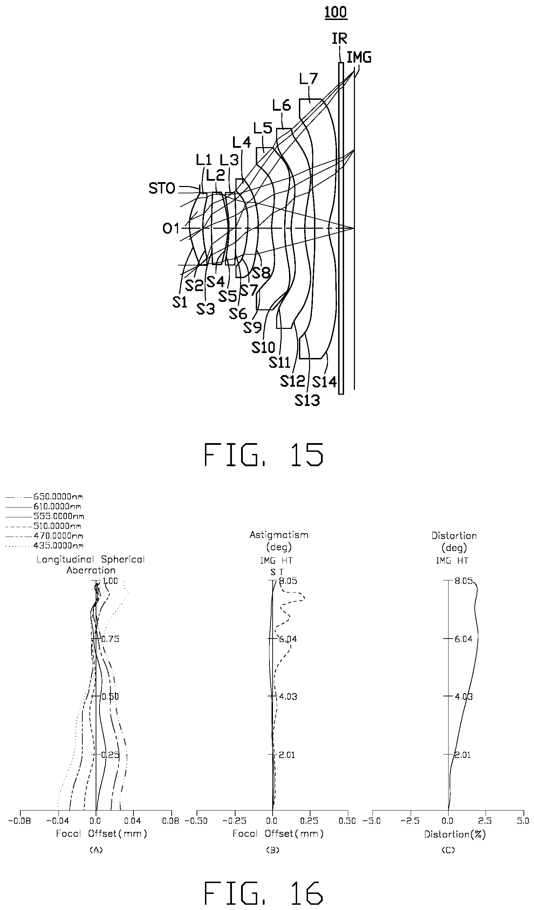

Referring to FIG. 15, a schematic structural diagram of an optical lens 100 disclosed in an eighth embodiment of the present disclosure is shown. The structure of the optical lens 100, the refractive power of each lens, and the surface shape of each lens may refer to the first embodiment. With the differences that in the eighth embodiment, the sixth lens L6 has positive refractive power, and the image side surface S6 of the third lens L3 is concave in a paraxial region thereof. Other parameters in the eighth embodiment are given in the following Table 8a, and the definitions of each parameter can be derived from the description of the previous embodiment and will not be repeated here.

In the eighth embodiment, the object side surface and the image side surface of each lens are aspherical surfaces. Table 8b provides the conic constant k and the high-order coefficients A4, A6, A8, A10, A12, A14, A16, A18, A20, A22, A24, A26, A28, A30 that can be used for the aspherical lens surfaces in the eighth embodiment.

**Table 8a**

| Eighth embodiment | | | | | | | | |
|---|---|---|---|---|---|---|---|---|
| F=6.805mm, FNO=1.89, FOV=98.6°, TTL=8.28mm, ImgH=8.052mm | | | | | | | | |
| Surface numeral | Surface Name | Surface type | Curvature radius | Thickness | Material | Refractive index | Abbe number | Focal length |
| OBJ | Object side | sphere | Infinity | Infinity | | | | |
| STO | stop | sphere | Infinity | -0.425 | | | | |
| S1 | L1 | asphere | 2.815 | 0.670 | Plastic | 1.546 | 56.037 | 9.712 |
| S2 | | asphere | 5.498 | 0.466 | | | | |
| S3 | L2 | asphere | 19.106 | 0.784 | Plastic | 1.546 | 56.037 | 10.517 |
| S4 | | asphere | -8.090 | 0.030 | | | | |
| S5 | L3 | asphere | -14.721 | 0.360 | Plastic | 1.677 | 19.239 | -21.350 |
| S6 | | asphere | 800.000 | 0.543 | | | | |
| S7 | L4 | asphere | -11.638 | 0.580 | Plastic | 1.677 | 19.239 | 276.691 |
| S8 | | asphere | -11.178 | 0.688 | | | | |
| S9 | L5 | asphere | 14.057 | 0.657 | Plastic | 1.537 | 55.685 | 48.683 |
| S10 | | asphere | 29.940 | 0.322 | | | | |
| S11 | L6 | asphere | 6.765 | 0.680 | Plastic | 1.591 | 28.364 | 54.594 |
| S12 | | asphere | 8.240 | 0.460 | | | | |
| S13 | L7 | asphere | 8.543 | 0.780 | Plastic | 1.570 | 37.400 | -6.538 |
| S14 | | asphere | 2.509 | 0.501 | | | | |
| S15 | Filter IR | sphere | Infinity | 0.150 | Glass | 1.518 | 64.166 | |
| S16 | | sphere | Infinity | 0.608 | | | | |
| IMG | Imaging plane | sphere | Infinity | 0.000 | | | | |
| Reference wavelength: 555.0 nm | | | | | | | | |

**Table 8b**

| Aspherical coefficients of eighth embodiment | | | | | |
|---|---|---|---|---|---|
| Surface numeral | K | A4 | A6 | A8 | A10 |
| 1 | -1.4419E+01 | 7.6631E-02 | -5.5966E-02 | 4.3295E-02 | -2.8577E-02 |
| 2 | -9.1577E+01 | 6.2433E-02 | -7.9032E-02 | 8.4032E-02 | -6.9034E-02 |
| 3 | 6.3743E+01 | -8.5924E-03 | -4.0141E-03 | 4.9074E-03 | -5.4315E-03 |
| 4 | -2.7154E+01 | -3.4114E-02 | 1.9511E-02 | -2.2124E-02 | 1.9890E-02 |
| 5 | 7.2048E+00 | -2.0228E-02 | 4.2359E-02 | -1.2924E-01 | 3.1954E-01 |
| 6 | -9.9000E+01 | -3.8245E-03 | 2.4508E-02 | -9.9482E-02 | 2.5940E-01 |
| 7 | -6.7160E+00 | -2.1121E-02 | 4.4193E-02 | -1.8528E-01 | 4.7049E-01 |
| 8 | -9.5152E+00 | -1.2015E-02 | 2.2864E-03 | -1.2285E-02 | 2.2029E-02 |
| 9 | 4.6437E+00 | 1.8050E-02 | -1.3634E-02 | 1.1503E-02 | -1.0223E-02 |
| 10 | 3.1645E+01 | 2.9298E-02 | -8.0426E-03 | 1.5943E-05 | 7.2006E-04 |
| 11 | -4.9143E+01 | 3.3727E-02 | -1.5000E-02 | 1.3061E-03 | 8.0927E-04 |
| 12 | -4.2885E+01 | 2.7962E-02 | -5.0908E-03 | -3.3893E-03 | 2.1211E-03 |
| 13 | -9.9000E+01 | -3.1358E-02 | 1.4335E-02 | -5.6060E-03 | 1.5993E-03 |
| 14 | -7.2324E+00 | -2.4602E-02 | 7.5317E-03 | -1.8756E-03 | 3.3196E-04 |

| Surface numeral | A12 | A14 | A16 | A18 | A20 |
|---|---|---|---|---|---|
| 1 | 1.3977E-02 | -4.7414E-03 | 1.0281E-03 | -1.2699E-04 | 6.7969E-06 |
| 2 | 3.9352E-02 | -1.4948E-02 | 3.5799E-03 | -4.8448E-04 | 2.8120E-05 |
| 3 | 4.0717E-03 | -1.9737E-03 | 6.1007E-04 | -1.0568E-04 | 7.6177E-06 |
| 4 | -1.2408E-02 | 5.1282E-03 | -1.3270E-03 | 1.9295E-04 | -1.1950E-05 |
| 5 | -5.8920E-01 | 7.8838E-01 | -7.6445E-01 | 5.3847E-01 | -2.7486E-01 |
| 6 | -4.6692E-01 | 5.9142E-01 | -5.3695E-01 | 3.5308E-01 | -1.6831E-01 |
| 7 | -8.0058E-01 | 9.5070E-01 | -8.0793E-01 | 4.9768E-01 | -2.2263E-01 |
| 8 | -2.5236E-02 | 1.9984E-02 | -1.1188E-02 | 4.4755E-03 | -1.2813E-03 |
| 9 | 6.1827E-03 | -2.5519E-03 | 7.4092E-04 | -1.5412E-04 | 2.3094E-05 |
| 10 | -3.3216E-04 | 9.3886E-05 | -1.8836E-05 | 2.7631E-06 | -2.9586E-07 |
| 11 | -3.9671E-04 | 9.5078E-05 | -1.4622E-05 | 1.5417E-06 | -1.1383E-07 |
| 12 | -6.1339E-04 | 1.1318E-04 | -1.4425E-05 | 1.3046E-06 | -8.4211E-08 |
| 13 | -3.0662E-04 | 4.0286E-05 | -3.7351E-06 | 2.4875E-07 | -1.1955E-08 |
| 14 | -4.0662E-05 | 3.5250E-06 | -2.2103E-07 | 1.0136E-08 | -3.3977E-10 |

| Surface numeral | A22 | A24 | A26 | A28 | A30 |
|---|---|---|---|---|---|
| 1 | 0.0000E+00 | 0.0000E+00 | 0.0000E+00 | 0.0000E+00 | 0.0000E+00 |
| 2 | 0.0000E+00 | 0.0000E+00 | 0.0000E+00 | 0.0000E+00 | 0.0000E+00 |
| 3 | 0.0000E+00 | 0.0000E+00 | 0.0000E+00 | 0.0000E+00 | 0.0000E+00 |
| 4 | 0.0000E+00 | 0.0000E+00 | 0.0000E+00 | 0.0000E+00 | 0.0000E+00 |
| 5 | 1.0047E-01 | -2.5602E-02 | 4.3152E-03 | -4.3203E-04 | 1.9439E-05 |
| 6 | 5.7562E-02 | -1.3760E-02 | 2.1823E-03 | -2.0630E-04 | 8.7988E-06 |
| 7 | 7.1594E-02 | -1.6124E-02 | 2.4133E-03 | -2.1556E-04 | 8.6918E-06 |
| 8 | 2.5993E-04 | -3.6409E-05 | 3.3415E-06 | -1.8044E-07 | 4.3365E-09 |
| 9 | -2.4741E-06 | 1.8491E-07 | -9.1586E-09 | 2.7005E-10 | -3.5860E-12 |
| 10 | 2.2719E-08 | -1.2109E-09 | 4.2329E-11 | -8.6972E-13 | 7.9423E-15 |
| 11 | 5.8817E-09 | -2.0838E-10 | 4.8229E-12 | -6.5675E-14 | 3.9894E-16 |
| 12 | 3.8470E-09 | -1.2133E-10 | 2.5101E-12 | -3.0637E-14 | 1.6713E-16 |
| 13 | 4.1089E-10 | -9.8438E-12 | 1.5605E-13 | -1.4704E-15 | 6.2331E-18 |
| 14 | 8.2223E-12 | -1.3965E-13 | 1.5775E-15 | -1.0634E-17 | 3.2351E-20 |

Please refer to FIG. 16. From the longitudinal spherical aberration diagram in part (A) of FIG. 16, the astigmatism diagram in part (B) of FIG. 16, and the distortion curve in part (C) of FIG. 16, it can be seen that the longitudinal spherical aberration, astigmatism, and distortion of the optical lens 100 in the eighth embodiment are well controlled, thus the optical lens 100 of this embodiment has good imaging quality. In addition, the wavelengths corresponding to the curves in parts (A), (B), and (C) of FIG. 16 may refer to the description of parts (A), (B), and (C) in FIG. 2 in the first embodiment, which will not be repeated here.

### Ninth Embodiment

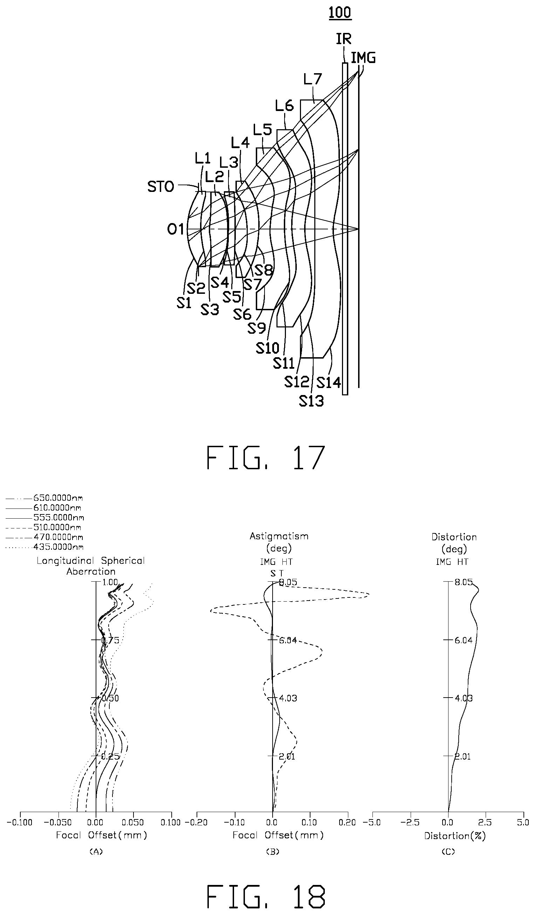

Referring to FIG. 17, a schematic structural diagram of an optical lens 100 disclosed in a ninth embodiment of the present disclosure is shown. The structure of the optical lens 100, the refractive power of each lens, and the surface shape of each lens may refer to the first embodiment. Other parameters in the ninth embodiment are given in the following Table 9a, and the definitions of each parameter can be derived from the description of the previous embodiment and will not be repeated here.

In the ninth embodiment, the object side surface and the image side surface of each lens are aspherical surfaces. Table 9b provides the conic constant k and the high-order coefficients A4, A6, A8, A10, A12, A14, A16, A18, A20, A22, A24, A26, A28, A30 that can be used for the aspherical lens surfaces in the ninth embodiment.

**Table 9a**

| Ninth embodiment | | | | | | | | |
|---|---|---|---|---|---|---|---|---|
| F=7.179mm, FNO=1.89, FOV=95.5°, TTL=8.69mm, ImgH=8.052mm | | | | | | | | |
| Surface numeral | Surface Name | Surface type | Curvature radius | Thickness | Material | Refractive index | Abbe number | Focal length |
| OBJ | Object side | sphere | Infinity | Infinity | | | | |
| STO | stop | sphere | Infinity | -0.506 | | | | |
| S1 | L1 | asphere | 2.883 | 0.714 | Plastic | 1.546 | 56.037 | 9.757 |
| S2 | | asphere | 5.736 | 0.478 | | | | |
| S3 | L2 | asphere | 18.946 | 0.840 | Plastic | 1.546 | 56.037 | 10.493 |
| S4 | | asphere | -8.082 | 0.030 | | | | |
| S5 | L3 | asphere | -12.208 | 0.353 | Plastic | 1.677 | 19.239 | -19.937 |
| S6 | | asphere | -129.378 | 0.535 | | | | |
| S7 | L4 | asphere | -11.341 | 0.614 | Plastic | 1.677 | 19.239 | 157.726 |
| S8 | | asphere | -10.476 | 0.731 | | | | |
| S9 | L5 | asphere | 13.619 | 0.663 | Plastic | 1.537 | 55.685 | 46.350 |
| S10 | | asphere | 29.591 | 0.350 | | | | |
| S11 | L6 | asphere | 7.768 | 0.680 | Plastic | 1.591 | 28.364 | -36.770 |
| S12 | | asphere | 5.537 | 0.476 | | | | |
| S13 | L7 | asphere | 8.063 | 0.964 | Plastic | 1.570 | 37.400 | -9.283 |
| S14 | | asphere | 3.056 | 0.474 | | | | |
| S15 | Filter IR | sphere | Infinity | 0.210 | Glass | 1.518 | 64.166 | |
| S16 | | sphere | Infinity | 0.582 | | | | |
| IMG | Imaging plane | sphere | Infinity | 0.000 | | | | |
| Reference wavelength: 555.0 nm | | | | | | | | |

**Table 9b**

| Aspherical coefficients of ninth embodiment | | | | | |
|---|---|---|---|---|---|
| Surface numeral | K | A4 | A6 | A8 | A10 |
| 1 | -1.4370E+01 | 7.0048E-02 | -3.5884E-02 | -1.7748E-02 | 9.7944E-02 |
| 2 | -9.8989E+01 | 6.1347E-02 | -8.9333E-02 | 1.4212E-01 | -2.4040E-01 |
| 3 | 6.0394E+01 | -7.1187E-03 | -7.4849E-03 | -3.8677E-04 | 5.5193E-02 |
| 4 | -2.9119E+01 | -5.1627E-02 | 1.9797E-01 | -8.6148E-01 | 2.2714E+00 |
| 5 | 2.5201E-01 | -2.5221E-02 | 9.0542E-02 | -3.4671E-01 | 8.7017E-01 |
| 6 | 6.7067E+01 | -1.2930E-03 | 1.1240E-02 | -4.6283E-02 | 1.2025E-01 |
| 7 | -8.5973E+00 | -2.7785E-02 | 8.6470E-02 | -3.1963E-01 | 7.4935E-01 |
| 8 | -1.0998E+01 | -1.5630E-02 | 1.7182E-02 | -4.0009E-02 | 5.7836E-02 |
| 9 | 9.0337E-01 | 1.5360E-02 | -1.5452E-02 | 1.5787E-02 | -1.4746E-02 |
| 10 | 3.6981E+01 | 3.4633E-02 | -1.0664E-02 | -1.0149E-03 | 2.1289E-03 |
| 11 | -5.2246E+01 | 3.0920E-02 | -1.0670E-02 | -2.2771E-03 | 2.5986E-03 |
| 12 | -4.6435E+01 | 3.0000E-02 | -8.6245E-03 | -1.2844E-03 | 1.4229E-03 |
| 13 | -9.5350E+01 | -2.8560E-02 | 1.1968E-02 | -4.4664E-03 | 1.2491E-03 |
| 14 | -7.0169E+00 | -2.4955E-02 | 7.3532E-03 | -1.6860E-03 | 2.6918E-04 |

| Surface numeral | A12 | A14 | A16 | A18 | A20 |
|---|---|---|---|---|---|
| 1 | -1.5933E-01 | 1.5683E-01 | -1.0384E-01 | 4.7737E-02 | -1.5296E-02 |
| 2 | 3.6719E-01 | -4.4671E-01 | 4.0653E-01 | -2.7044E-01 | 1.3001E-01 |
| 3 | -1.6676E-01 | 2.6407E-01 | -2.6502E-01 | 1.7998E-01 | -8.4806E-02 |
| 4 | -3.8527E+00 | 4.4384E+00 | -3.5925E+00 | 2.0811E+00 | -8.6760E-01 |
| 5 | -1.4549E+00 | 1.6784E+00 | -1.3715E+00 | 8.0590E-01 | -3.4183E-01 |
| 6 | -2.2454E-01 | 3.0054E-01 | -2.8987E-01 | 2.0205E-01 | -1.0146E-01 |
| 7 | -1.1913E+00 | 1.3277E+00 | -1.0606E+00 | 6.1443E-01 | -2.5845E-01 |
| 8 | -5.7443E-02 | 4.0428E-02 | -2.0497E-02 | 7.5444E-03 | -2.0133E-03 |
| 9 | 9.2848E-03 | -3.9825E-03 | 1.1968E-03 | -2.5648E-04 | 3.9409E-05 |
| 10 | -9.6294E-04 | 2.6008E-04 | -4.8015E-05 | 6.3393E-06 | -6.0681E-07 |
| 11 | -9.6694E-04 | 2.1712E-04 | -3.2793E-05 | 3.4622E-06 | -2.5887E-07 |
| 12 | -4.6158E-04 | 8.9972E-05 | -1.1852E-05 | 1.0956E-06 | -7.1834E-08 |
| 13 | -2.3526E-04 | 3.0283E-05 | -2.7448E-06 | 1.7848E-07 | -8.3680E-09 |
| 14 | -2.9353E-05 | 2.2401E-06 | -1.2267E-07 | 4.8935E-09 | -1.4270E-10 |

| Surface numeral | A22 | A24 | A26 | A28 | A30 |
|---|---|---|---|---|---|
| 1 | 3.3560E-03 | -4.8163E-04 | 4.0944E-05 | -1.6023E-06 | 5.2360E-09 |
| 2 | -4.4513E-02 | 1.0562E-02 | -1.6484E-03 | 1.5208E-04 | -6.2794E-06 |
| 3 | 2.7783E-02 | -6.2086E-03 | 9.0207E-04 | -7.6736E-05 | 2.8965E-06 |
| 4 | 2.5831E-01 | -5.3604E-02 | 7.3683E-03 | -6.0310E-04 | 2.2258E-05 |
| 5 | 1.0376E-01 | -2.1987E-02 | 3.0893E-03 | -2.5869E-04 | 9.7729E-06 |
| 6 | 3.6258E-02 | -8.9789E-03 | 1.4629E-03 | -1.4092E-04 | 6.0792E-06 |
| 7 | 7.8117E-02 | -1.6527E-02 | 2.3227E-03 | -1.9472E-04 | 7.3673E-06 |
| 8 | 3.8482E-04 | -5.1254E-05 | 4.5093E-06 | -2.3516E-07 | 5.4965E-09 |
| 9 | -4.3090E-06 | 3.2725E-07 | -1.6404E-08 | 4.8783E-10 | -6.5163E-12 |
| 10 | 4.1839E-08 | -2.0238E-09 | 6.5050E-11 | -1.2449E-12 | 1.0710E-14 |
| 11 | 1.3654E-08 | -4.9702E-10 | 1.1885E-11 | -1.6806E-13 | 1.0653E-15 |
| 12 | 3.3204E-09 | -1.0570E-10 | 2.2043E-12 | -2.7097E-14 | 1.4882E-16 |
| 13 | 2.8030E-10 | -6.5349E-12 | 1.0059E-13 | -9.1767E-16 | 3.7525E-18 |
| 14 | 3.0141E-12 | -4.4959E-14 | 4.4987E-16 | -2.7164E-18 | 7.5083E-21 |

Please refer to FIG. 18. From the longitudinal spherical aberration diagram in part (A) of FIG. 18, the astigmatism diagram in part (B) of FIG. 18, and the distortion curve in part (C) of FIG. 18, it can be seen that the longitudinal spherical aberration, astigmatism, and distortion of the optical lens 100 in the ninth embodiment are well controlled, thus the optical lens 100 of this embodiment has good imaging quality. In addition, the wavelengths corresponding to the curves in parts (A), (B), and (C) of FIG. 18 may refer to the description of parts (A), (B), and (C) in FIG. 2 in the first embodiment, which will not be repeated here.

### Tenth Embodiment

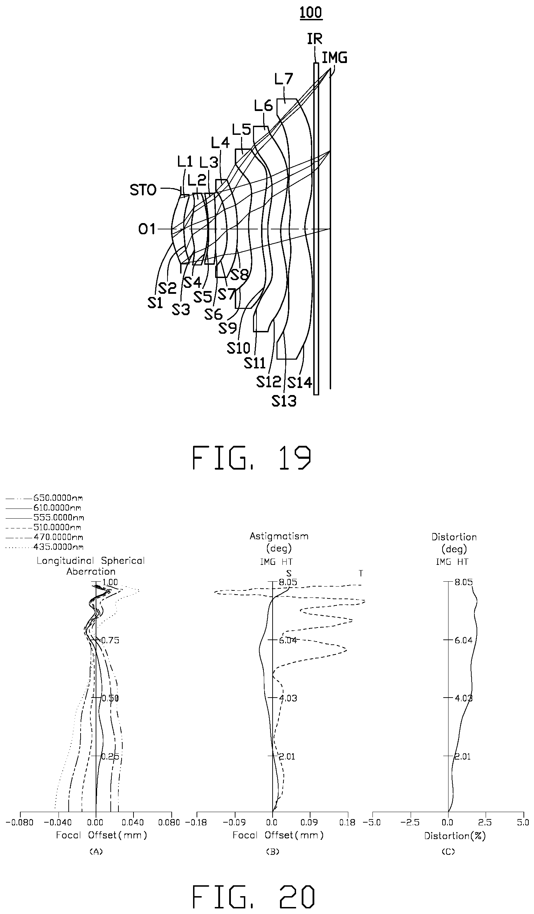

Referring to FIG. 19, a schematic structural diagram of an optical lens 100 disclosed in a tenth embodiment of the present disclosure is shown. The structure of the optical lens 100, the refractive power of each lens, and the surface shape of each lens may refer to the first embodiment. With the difference that in the tenth embodiment, the sixth lens L6 has positive refractive power. Other parameters in the tenth embodiment are given in the following Table 10a, and the definitions of each parameter can be derived from the description of the previous embodiment and will not be repeated here.

In the tenth embodiment, the object side surface and the image side surface of each lens are aspherical surfaces. Table 10b provides the conic constant k and the high-order coefficients A4, A6, A8, A10, A12, A14, A16, A18, A20, A22, A24, A26, A28, A30 that can be used for the aspherical lens surfaces in the tenth embodiment.

**Table 10a**

| Tenth embodiment | | | | | | | | |
|---|---|---|---|---|---|---|---|---|
| F=6.70mm, FNO=1.83, FOV=99.7°, TTL=8.18mm, ImgH=8.052mm | | | | | | | | |
| Surface numeral | Surface Name | Surface type | Curvature radius | Thickness | Material | Refractive index | Abbe number | Focal length |
| OBJ | Object side | sphere | Infinity | Infinity | | | | |
| STO | stop | sphere | Infinity | -0.460 | | | | |
| S1 | L1 | asphere | 2.764 | 0.650 | Plastic | 1.546 | 56.037 | 9.528 |
| S2 | | asphere | 5.407 | 0.459 | | | | |
| S3 | L2 | asphere | 18.237 | 0.707 | Plastic | 1.546 | 56.037 | 10.646 |
| S4 | | asphere | -8.413 | 0.030 | | | | |
| S5 | L3 | asphere | -14.411 | 0.360 | Plastic | 1.677 | 19.239 | -24.915 |
| S6 | | asphere | -100.011 | 0.524 | | | | |
| S7 | L4 | asphere | -13.128 | 0.580 | Plastic | 1.677 | 19.239 | -317.976 |
| S8 | | asphere | -14.230 | 0.604 | | | | |
| S9 | L5 | asphere | 13.458 | 0.662 | Plastic | 1.537 | 55.685 | 46.525 |
| S10 | | asphere | 28.699 | 0.266 | | | | |
| S11 | L6 | asphere | 5.057 | 0.656 | Plastic | 1.591 | 28.364 | 48.095 |
| S12 | | asphere | 5.855 | 0.440 | | | | |
| S13 | L7 | asphere | 6.097 | 0.780 | Plastic | 1.570 | 37.400 | -6.852 |
| S14 | | asphere | 2.270 | 0.467 | | | | |
| S15 | Filter IR | sphere | Infinity | 0.210 | Glass | 1.518 | 64.166 | |
| S16 | | sphere | Infinity | 0.575 | | | | |
| IMG | Imaging plane | sphere | Infinity | 0.000 | | | | |
| Reference wavelength: 555.0 nm | | | | | | | | |

**Table 10b**

| Aspherical coefficients of tenth embodiment | | | | | |
|---|---|---|---|---|---|
| Surface numeral | K | A4 | A6 | A8 | A10 |
| 1 | -1.4130E+01 | 7.8865E-02 | -5.6730E-02 | 4.2467E-02 | -2.6548E-02 |
| 2 | -8.6812E+01 | 6.2425E-02 | -7.5204E-02 | 7.6460E-02 | -6.0507E-02 |
| 3 | 6.3250E+01 | -8.2670E-03 | 2.7373E-03 | -9.0365E-02 | 4.4358E-01 |
| 4 | -2.2283E+01 | -4.7675E-02 | 1.6449E-01 | -7.6091E-01 | 2.2824E+00 |
| 5 | 1.7421E+01 | -2.5323E-02 | 1.1080E-01 | -4.6350E-01 | 1.2776E+00 |
| 6 | -9.9000E+01 | 8.1287E-03 | -4.2532E-02 | 1.5180E-01 | -3.5805E-01 |
| 7 | -1.6033E+01 | -8.0091E-03 | -1.9278E-02 | 2.6166E-02 | -5.8352E-03 |
| 8 | -1.8023E+01 | -8.4442E-03 | -5.0623E-03 | -2.4847E-03 | 1.3047E-02 |
| 9 | 7.4631E+00 | 1.9018E-02 | -1.1491E-02 | 7.8815E-03 | -7.0550E-03 |
| 10 | 3.0177E+01 | 2.5733E-02 | -7.8782E-03 | 2.5817E-03 | -1.3821E-03 |
| 11 | -4.4833E+01 | 4.7002E-02 | -3.1892E-02 | 1.2405E-02 | -3.6648E-03 |
| 12 | -3.7097E+01 | 3.7024E-02 | -1.6585E-02 | 3.4491E-03 | -3.3498E-04 |
| 13 | -9.0027E+01 | -2.8159E-02 | 9.0721E-03 | -3.2092E-03 | 1.0345E-03 |
| 14 | -7.9711E+00 | -2.4338E-02 | 7.6926E-03 | -2.1055E-03 | 4.1664E-04 |

| Surface numeral | A12 | A14 | A16 | A18 | A20 |
|---|---|---|---|---|---|
| 1 | 1.1904E-02 | -3.5497E-03 | 6.2488E-04 | -5.2778E-05 | 1.0917E-06 |
| 2 | 3.3146E-02 | -1.2012E-02 | 2.6927E-03 | -3.2652E-04 | 1.5522E-05 |
| 3 | -1.1670E+00 | 1.9417E+00 | -2.1879E+00 | 1.7259E+00 | -9.6536E-01 |
| 4 | -4.5739E+00 | 6.3444E+00 | -6.2361E+00 | 4.3991E+00 | -2.2323E+00 |
| 5 | -2.4045E+00 | 3.1777E+00 | -3.0073E+00 | 2.0595E+00 | -1.0215E+00 |
| 6 | 5.7108E-01 | -6.4516E-01 | 5.2888E-01 | -3.1790E-01 | 1.4000E-01 |
| 7 | -5.2029E-02 | 1.1070E-01 | -1.2386E-01 | 9.0229E-02 | -4.5384E-02 |
| 8 | -1.9538E-02 | 1.7493E-02 | -1.0419E-02 | 4.2947E-03 | -1.2438E-03 |
| 9 | 4.2096E-03 | -1.6469E-03 | 4.3514E-04 | -7.8667E-05 | 9.6750E-06 |
| 10 | 5.5133E-04 | -1.4421E-04 | 2.5560E-05 | -3.1517E-06 | 2.7314E-07 |
| 11 | 7.8633E-04 | -1.1984E-04 | 1.3050E-05 | -1.0271E-06 | 5.8848E-08 |
| 12 | -2.9619E-05 | 1.6804E-05 | -3.0663E-06 | 3.3628E-07 | -2.4431E-08 |
| 13 | -2.2427E-04 | 3.2262E-05 | -3.1936E-06 | 2.2315E-07 | -1.1114E-08 |
| 14 | -5.6917E-05 | 5.4587E-06 | -3.7468E-07 | 1.8595E-08 | -6.6724E-10 |

| Surface numeral | A22 | A24 | A26 | A28 | A30 |
|---|---|---|---|---|---|
| 1 | 0.0000E+00 | 0.0000E+00 | 0.0000E+00 | 0.0000E+00 | 0.0000E+00 |
| 2 | 0.0000E+00 | 0.0000E+00 | 0.0000E+00 | 0.0000E+00 | 0.0000E+00 |
| 3 | 3.8143E-01 | -1.0414E-01 | 1.8698E-02 | -1.9864E-03 | 9.4599E-05 |
| 4 | 8.0719E-01 | -2.0281E-01 | 3.3630E-02 | -3.3076E-03 | 1.4610E-04 |
| 5 | 3.6320E-01 | -9.0194E-02 | 1.4851E-02 | -1.4565E-03 | 6.4393E-05 |
| 6 | -4.4597E-02 | 9.9884E-03 | -1.4895E-03 | 1.3253E-04 | -5.3119E-06 |
| 7 | 1.5974E-02 | -3.8769E-03 | 6.1947E-04 | -5.8709E-05 | 2.5011E-06 |
| 8 | 2.5241E-04 | -3.5118E-05 | 3.1869E-06 | -1.6964E-07 | 4.0110E-09 |
| 9 | -7.8608E-07 | 3.9262E-08 | -9.8981E-10 | 2.5265E-12 | 2.8954E-13 |
| 10 | -1.6582E-08 | 6.9273E-10 | -1.9116E-11 | 3.1776E-13 | -2.4515E-15 |
| 11 | -2.4494E-09 | 7.2788E-11 | -1.4769E-12 | 1.8471E-14 | -1.0789E-16 |
| 12 | 1.2029E-09 | -3.9743E-11 | 8.4444E-13 | -1.0433E-14 | 5.6983E-17 |
| 13 | 3.9228E-10 | -9.5858E-12 | 1.5417E-13 | -1.4674E-15 | 6.2613E-18 |
| 14 | 1.7116E-11 | -3.0556E-13 | 3.6025E-15 | -2.5195E-17 | 7.9117E-20 |

Please refer to FIG. 20. From the longitudinal spherical aberration diagram in part (A) of FIG. 20, the astigmatism diagram in part (B) of FIG. 20, and the distortion curve in part (C) of FIG. 20, it can be seen that the longitudinal spherical aberration, astigmatism, and distortion of the optical lens 100 in the tenth embodiment are well controlled, thus the optical lens 100 of this embodiment has good imaging quality. In addition, the wavelengths corresponding to the curves in parts (A), (B), and (C) of FIG. 20 may refer to the description of parts (A), (B), and (C) in FIG. 2 in the first embodiment, which will not be repeated here.

Table 11 shows the values of multiple conditional expressions in the optical lens of the first to ten embodiments.

**Table 11**

| Conditional expression | Embodi ment 1 | Embodi ment 2 | Embodi ment 3 | Embodi ment 4 | Embodi ment 5 | Embodi ment 6 | Embodi ment 7 | Embodi ment 8 | Embodi ment 9 | Embodi ment 10 |
|---|---|---|---|---|---|---|---|---|---|---|
| TTL/ImgH | 1.028 | 1.016 | 1.016 | 1.026 | 1.028 | 1.028 | 1.016 | 1.028 | 1.080 | 0.990 |
| f1/f | 1.358 | 1.431 | 1.442 | 1.419 | 1.421 | 1.433 | 1.424 | 1.427 | 1.359 | 1.485 |
| f2/f | 1.564 | 1.637 | 1.670 | 1.564 | 1.551 | 1.553 | 1.638 | 1.545 | 1.462 | 1.660 |
| f3/f | -2.641 | -3.589 | -3.779 | -3.160 | -3.320 | -3.288 | -3.649 | -3.137 | -2.777 | -3.884 |
| \|f4\|/f | 139.052 | 67.908 | 97.605 | 62.528 | 40.616 | 50.143 | 107.945 | 40.660 | 21.970 | 49.568 |
| f5/f | 6.054 | 7.046 | 7.202 | 6.919 | 7.458 | 7.279 | 7.158 | 7.154 | 6.456 | 7.253 |
| \|f6\|/f | 29.517 | 8.580 | 8.937 | 9.120 | 14.306 | 8.629 | 10.306 | 8.023 | 5.122 | 7.497 |
| f7/f | -1.169 | -0.974 | -0.997 | -0.977 | -1.006 | -0.973 | -0.982 | -0.961 | -1.293 | -1.068 |
| f/R1 | 2.456 | 2.388 | 2.363 | 2.409 | 2.426 | 2.395 | 2.394 | 2.417 | 2.490 | 2.321 |
| f/R2 | 1.215 | 1.212 | 1.196 | 1.221 | 1.241 | 1.220 | 1.212 | 1.238 | 1.252 | 1.186 |
| R3/f | 3.209 | 2.814 | 2.840 | 2.878 | 2.840 | 2.839 | 2.817 | 2.808 | 2.639 | 2.843 |
| R4/f | -1.150 | -1.290 | -1.324 | -1.198 | -1.189 | -1.191 | -1.291 | -1.189 | -1.126 | -1.311 |
| R5/f | -1.247 | -2.099 | -2.213 | -1.769 | -1.955 | -1.932 | -2.173 | -2.163 | -1.701 | -2.246 |
| \|R6\|/f | 4.196 | 15.582 | 16.553 | 10.348 | 15.169 | 14.812 | 18.255 | 117.561 | 18.022 | 15.590 |
| R7/f | -2.732 | -1.977 | -1.997 | -2.049 | -1.596 | -1.675 | -1.946 | -1.710 | -1.580 | -2.046 |
| R8/f | -2.689 | -1.929 | -1.973 | -1.988 | -1.541 | -1.629 | -1.929 | -1.643 | -1.459 | -2.218 |
| R9/f | 1.710 | 2.044 | 2.081 | 2.016 | 2.150 | 2.108 | 2.064 | 2.066 | 1.897 | 2.098 |
| R10/f | 3.538 | 4.373 | 4.435 | 4.335 | 4.573 | 4.507 | 4.387 | 4.400 | 4.122 | 4.474 |
| f/R11 | 1.309 | 1.086 | 1.098 | 1.019 | 1.019 | 0.986 | 1.101 | 1.006 | 0.924 | 1.269 |
| R12/f | 0.696 | 1.079 | 1.054 | 1.153 | 1.069 | 1.219 | 1.024 | 1.211 | 0.771 | 0.913 |
| R13/f | 0.799 | 1.263 | 1.211 | 1.371 | 1.185 | 1.147 | 1.225 | 1.255 | 1.123 | 0.950 |
| f/R14 | 2.903 | 2.683 | 2.679 | 2.610 | 2.682 | 2.777 | 2.696 | 2.712 | 2.349 | 2.826 |
| FOV | 98.788 | 99.703 | 100.128 | 99.095 | 98.700 | 99.038 | 99.695 | 98.627 | 95.518 | 102.062 |
| FNO | 1.940 | 1.830 | 1.830 | 1.980 | 1.890 | 1.870 | 1.850 | 1.890 | 1.890 | 1.850 |
| FNO*tan(HF OV) | 2.263 | 2.169 | 2.186 | 2.322 | 2.201 | 2.191 | 2.193 | 2.198 | 2.081 | 2.287 |
| TTL/TD | 1.170 | 1.176 | 1.177 | 1.174 | 1.181 | 1.184 | 1.177 | 1.179 | 1.170 | 1.186 |
| TTL/f | 1.217 | 1.221 | 1.234 | 1.224 | 1.217 | 1.225 | 1.221 | 1.217 | 1.211 | 1.242 |
| SD6/SD1 | 0.991 | 1.000 | 1.008 | 1.049 | 1.002 | 0.997 | 1.002 | 0.999 | 0.962 | 1.027 |
| SD8/SD1 | 1.298 | 1.337 | 1.373 | 1.405 | 1.342 | 1.342 | 1.368 | 1.344 | 1.266 | 1.374 |
| SD10/SD1 | 2.325 | 2.187 | 2.214 | 2.343 | 2.244 | 2.234 | 2.213 | 2.247 | 2.131 | 2.288 |
| SD14/SD9 | 1.990 | 2.007 | 1.997 | 2.036 | 2.007 | 1.994 | 2.002 | 1.996 | 2.027 | 2.021 |
| SD14/SD1 | 3.681 | 3.522 | 3.583 | 3.805 | 3.573 | 3.551 | 3.570 | 3.586 | 3.393 | 3.683 |
| CT7/CT1 | 0.991 | 0.980 | 0.993 | 1.025 | 1.023 | 0.999 | 0.981 | 1.015 | 0.952 | 1.009 |
| CT2/CT1 | 0.994 | 1.140 | 1.125 | 1.130 | 1.235 | 1.196 | 1.132 | 1.170 | 1.176 | 1.088 |
| CT1/CT3 | 1.839 | 1.911 | 1.908 | 1.864 | 1.833 | 1.875 | 1.900 | 1.861 | 2.023 | 1.806 |
| CT2/CT4 | 1.198 | 1.352 | 1.333 | 1.291 | 1.405 | 1.391 | 1.334 | 1.352 | 1.368 | 1.219 |
| CT5/CT3 | 1.737 | 1.831 | 1.831 | 1.850 | 1.794 | 1.806 | 1.831 | 1.825 | 1.878 | 1.839 |
| CT6/CT3 | 1.824 | 1.872 | 1.894 | 1.911 | 1.875 | 1.872 | 1.864 | 1.889 | 1.926 | 1.822 |
| CT7/CT3 | 2.053 | 2.167 | 2.167 | 2.297 | 2.167 | 2.167 | 2.167 | 2.167 | 2.731 | 2.167 |
| CT7/CT5 | 1.182 | 1.184 | 1.184 | 1.242 | 1.207 | 1.200 | 1.184 | 1.187 | 1.454 | 1.178 |
| DL14/DL57 | 1.105 | 1.194 | 1.185 | 1.151 | 1.186 | 1.193 | 1.187 | 1.184 | 1.184 | 1.184 |
| DL14/AT12 | 7.301 | 7.409 | 7.384 | 7.386 | 7.537 | 7.594 | 7.368 | 7.367 | 7.182 | 7.479 |
| DL14/AT34 | 7.112 | 6.462 | 6.440 | 6.329 | 6.412 | 6.430 | 6.428 | 6.322 | 6.417 | 6.552 |
| (DL14+DL5 7)/AT45 | 7.947 | 9.886 | 9.962 | 9.497 | 9.342 | 9.411 | 9.863 | 9.203 | 8.662 | 10.483 |
| SD9/Yc9 | 1.650 | 1.795 | 1.794 | 1.750 | 1.809 | 1.830 | 1.820 | 1.810 | 1.800 | 1.767 |
| SD10/Yc10 | 1.571 | 1.613 | 1.620 | 1.580 | 1.632 | 1.626 | 1.632 | 1.632 | 1.622 | 1.616 |
| SD11/Yc11 | 2.260 | 2.296 | 2.409 | 2.322 | 2.321 | 2.308 | 2.317 | 2.316 | 2.244 | 2.294 |
| SD12/Yc12 | 2.052 | 2.023 | 2.035 | 2.034 | 1.952 | 1.953 | 2.075 | 2.039 | 1.980 | 1.990 |
| SD13/Yc13 | 1.438 | 1.528 | 1.589 | 1.540 | 5.320 | 1.658 | 1.602 | 1.640 | 5.371 | 5.221 |
| SD14/Yc14 | 2.699 | 2.560 | 2.473 | 2.609 | 2.146 | 1.986 | 2.561 | 2.219 | 2.470 | 2.402 |

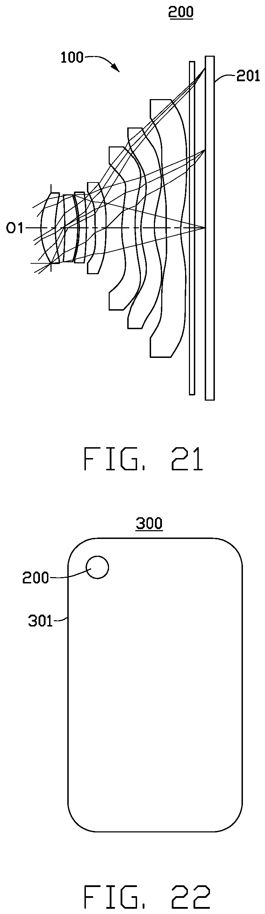

Referring to FIG. 21, the present disclosure also provides a camera module 200, which includes an image sensor 201 and the optical lens 100 of any of the embodiments described in the first aspect. The image sensor 201 is arranged on the image side of the optical lens 100. A photosensitive surface of the image sensor 201 is located on the imaging plane of the optical lens 100, and the light of the object passing through the lenses and incident on the photosensitive surface can be converted into an electrical signal of the image. The image sensor 201 may be a complementary metal oxide semiconductor or a charge-coupled device. The camera module 200 may be a camera module integrated in an electronic device or an independent lens. By incorporating the optical lens 100 provided in the embodiments of the present disclosure into the camera module 200, the camera module 200 may improve the imaging quality while meeting the requirements of miniaturization design.

Referring to FIG. 22, the present disclosure also provides an electronic device 300, which includes a housing 301 and the above-mentioned camera module 200. The camera module 200 is arranged in the housing 301. The electronic device 300 may be, but is not limited to, a smart phone, a computer, and a smart watch. By incorporating the camera module 200 provided in the present disclosure into the electronic device 300, the electronic device 300 may improve the imaging quality while meeting the requirements of miniaturization design.

It should be noted that the above examples are only used to illustrate the technical solutions of the present disclosure rather than to limit them. Although the present disclosure has been described in detail with reference to the preferred embodiments, it should be understood by those skilled in the art that the technical solutions of the present disclosure can be modified or equivalently substituted without departing from the spirit and scope of the present disclosure.

## Claims

1. An optical lens (100), **characterized by** comprising a total of seven lenses with refractive power, the seven lenses sequentially comprising, from an object side to an image side along an optical axis (O1) of the optical lens (100):
a first lens (L1) having positive refractive power, an object side surface (S1) of the first lens (L1) being convex in a paraxial region thereof, and an image side surface (S2) of the first lens (L1) being concave in a paraxial region thereof;
a second lens (L2) having positive refractive power, an object side surface (S3) of the second lens (L2) being convex in a paraxial region thereof, and an image side surface (S4) of the second lens (L2) being convex in a paraxial region thereof;
a third lens (L3) having negative refractive power, an object side surface (S5) of the third lens (L3) being concave in a paraxial region thereof
a fourth lens (L4) having positive refractive power, an object side surface (S7) of the fourth lens (L4) being concave in a paraxial region thereof, and an image side surface (S8) of the fourth lens (L4) being convex in a paraxial region thereof;
a fifth lens (L5) having positive refractive power, an object side surface (S9) of the fifth lens (L5) being convex in a paraxial region thereof, and an image side surface (S10) of the fifth lens (L5) being concave in a paraxial region thereof;
a sixth lens (L6) having refractive power, an object side surface (S11) of the sixth lens (L6) being convex in a paraxial region thereof, and an image side surface (S12) of the sixth lens (L6) being concave in a paraxial region thereof; and
a seventh lens (L7) having negative refractive power, an object side surface (S13) of the seventh lens (L7) being convex in a paraxial region thereof, and an image side surface (S14) of the seventh lens (L7) being concave in a paraxial region thereof;
wherein the optical lens (100) satisfies the following relationship: $0.95 < TTL / ImgH < 1.1 ;$
wherein, TTL is a distance from the object side surface (S1) of the first lens (L1) to an imaging plane of the optical lens (100) along the optical axis (O1), and ImgH is half of an image height corresponding to a maximum field of view angle of the optical lens (100).

2. The optical lens (100) according to claim 1, wherein the optical lens (100) further satisfies at least one of following relationships: $1.3 < f 1 / f < 1.5 ,$ $2.3 < f / R 1 < 2.5 ,$
and $1.1 < f / R 2 < 1.3 ;$
wherein, f is an effective focal length of the optical lens (100), f1 is an effective focal length of the first lens (L1), R1 is a radius of curvature of the object side surface (S1) of the first lens (L1) at the optical axis (O1), and R2 is a radius of curvature of the image side surface (S2) of the first lens (L1) at the optical axis (O1).

3. The optical lens (100) according to claim 1, wherein the optical lens (100) further satisfies at least one of following relationships: $1.4 < f 2 / f < 1.7 ,$ $2.6 < R 3 / f < 3.1 ,$ and $- 1.4 < R 4 / f < - 1.1 ;$ wherein, f is an effective focal length of the optical lens (100), f2 is an effective focal length of the second lens (L2), R3 is a radius of curvature of the object side surface (S3) of the second lens (L2) at the optical axis (O1), and R4 is a radius of curvature of the image side surface (S4) of the second lens (L2) at the optical axis (O1).

4. The optical lens (100) according to claim 1, wherein the optical lens (100) further satisfies at least one of following relationships: $- 3.9 < f 3 / f < - 2.6 ,$ $- 2.3 < R 5 / f < - 1.2 ,$ and $4 < \left|R6\right| / f ;$ wherein, f is an effective focal length of the optical lens (100), f3 is an effective focal length of the third lens (L3), R5 is a radius of curvature of the object side surface (S5) of the third lens (L3) at the optical axis (O1), and R6 is a radius of curvature of the image side surface (S6) of the third lens (L3) at the optical axis (O1).

5. The optical lens (100) according to claim 1, wherein the optical lens (100) further satisfies at least one of following relationships: $20 < \left|f4\right| / f ,$ $- 2.8 < R 7 / f < - 1.5 ,$ and $- 2.7 < R 8 / f < - 1.4 ;$ wherein, f is an effective focal length of the optical lens (100), f4 is an effective focal length of the fourth lens (L4), R7 is a radius of curvature of the object side surface (S7) of the fourth lens (L4) at the optical axis (O1), and R8 is a radius of curvature of the image side surface (S8) of the fourth lens (L4) at the optical axis (O1).

6. The optical lens (100) according to claim 1, wherein the optical lens (100) further satisfies at least one of following relationships: $6 < f 5 / f < 7.5 ,$ $1.7 < R 9 / f < 2.2 ,$ and $3.5 < R 10 / f < 4.6 ;$ wherein, f is an effective focal length of the optical lens (100), f5 is an effective focal length of the fifth lens (L5), R9 is a radius of curvature of the object side surface (S9) of the fifth lens (L5) at the optical axis (O1), and R10 is a radius of curvature of the image side surface (S10) of the fifth lens (L5) at the optical axis (O1).

7. The optical lens (100) according to claim 1, wherein the optical lens (100) further satisfies at least one of following relationships: $5 < \left|f6\right| / f ,$ $0.9 < f / R 11 < 1.4 ,$ and $0.6 < R 12 / f < 1.3 ;$ wherein, f is an effective focal length of the optical lens (100), f6 is an effective focal length of the sixth lens (L6), R11 is a radius of curvature of the object side surface (S11) of the sixth lens (L6) at the optical axis (O1), and R12 is a radius of curvature of the image side surface (S12) of the sixth lens (L6) at the optical axis (O1).

8. The optical lens (100) according to claim 1, wherein the optical lens (100) further satisfies at least one of following relationships: $- 1.3 < f 7 / f < - 0.9 ,$ $0.7 < R 13 / f < 1.4 ,$ and $2.3 < f / R 14 < 3 ;$ wherein, f is an effective focal length of the optical lens (100), f7 is an effective focal length of the seventh lens (L7), R13 is a radius of curvature of the object side surface (S13) of the seventh lens (L7) at the optical axis (O1), and R14 is a radius of curvature of the image side surface (S14) of the seventh lens (L7) at the optical axis (O1).

9. The optical lens (100) according to claim 1, wherein the optical lens (100) further satisfies at least one of following relationships:${95}^{∘} {< FOV < 103}^{∘} ,$$1.8 < FNO < 2 ,$ $2 < FNO * tan \left(HFOV\right) < 2.4 ,$ $1.1 < TTL / TD < 1.2 ,$ and $1.2 < TTL / f < 1.3 ;$ wherein, FOV is the maximum field of view angle of the optical lens (100), FNO is an F-number of the optical lens (100), HFOV is half of the maximum field of view angle of the optical lens (100), TD is a distance from the object side surface (S1) of the first lens (L1) to the image side surface of the seventh lens (L7) along the optical axis (O1), and f is an effective focal length of the optical lens (100).

10. The optical lens (100) according to claim 1, wherein the optical lens (100) further satisfies at least one of following relationships: $0.9 < SD 6 / SD 1 < 1.1 ,$ $1.2 < SD 8 / SD 1 < 1.5 ,$ $2.1 < SD 10 / SD 1 < 2.4 ,$ $1.9 < SD 14 / SD 9 < 2.1 ,$ and $3.3 < SD 14 / SD 1 < 3.9 ;$ wherein, SD1 is half of a maximum effective aperture of the object side surface (S1) of the first lens (L1), SD6 is half of a maximum effective aperture of the image side surface (S6) of the third lens (L3), SD8 is half of a maximum effective aperture of the image side surface (S8) of the fourth lens (L4), SD9 is half of a maximum effective aperture of the object side surface (S9) of the fifth lens (L5), SD10 is half of a maximum effective aperture of the image side surface (S10) of the fifth lens (L5), and SD14 is half of a maximum effective aperture of the image side surface (S14) of the seventh lens (L7).

11. The optical lens (100) according to claim 1, wherein the optical lens (100) further satisfies at least one of following relationships: $0.9 < CT 7 / CT 1 < 1.1 ,$ $0.9 < CT 2 / CT 1 < 1.3 ,$ $1.8 < CT 1 / CT 3 < 2.1 ,$ $1.1 < CT 2 / CT 4 < 1.5 ,$ $1.7 < CT 5 / CT 3 < 1.9 ,$ $1.8 < CT 6 / CT 3 < 2 ,$ $2 < CT 7 / CT 3 < 2.8 ,$ and $1.1 < CT 7 / CT 5 < 1.5 ;$ wherein, CT1 is a thickness of the first lens (L1) along the optical axis (O1), CT2 is a thickness of the second lens (L2) along the optical axis (O1), CT3 is a thickness of the third lens (L3) along the optical axis (O1), CT4 is a thickness of the fourth lens (L4) along the optical axis (O1), CT5 is a thickness of the fifth lens (L5) along the optical axis (O1), CT6 is a thickness of the sixth lens (L6) along the optical axis (O1), and CT7 is a thickness of the seventh lens (L7) along the optical axis (O1).

12. The optical lens (100) according to claim 1, wherein the optical lens (100) further satisfies at least one of following relationships: $1.1 < DL 14 / DL 57 < 1.2 ,$ $7.1 < DL 14 / AT 12 < 7.6 ,$ $6.3 < DL 14 / AT 34 < 7.2 ,$ and $7.9 < \left(DL14+DL57\right) / AT 45 < 11 ;$ wherein, DL14 is a distance from the object side surface (S1) of the first lens (L1) to the image side surface (S8) of the fourth lens (L4) along the optical axis (O1), DL57 is a distance from the object side surface (S9) of the fifth lens (L5) to the image side surface (S14) of the seventh lens (L7) along the optical axis (O1), AT12 is a distance on the optical axis (O1) from the image side surface (S2) of the first lens (L1) to the object side surface (S3) of the second lens (L2), AT34 is a distance on the optical axis (O1) from the image side surface (S6) of the third lens (L3) to the object side surface (S7) of the fourth lens (L4), and AT45 is a distance on the optical axis (O1) from the image side surface (S8) of the fourth lens (L4) to the object side surface (S9) of the fifth lens (L5).

13. The optical lens (100) according to claim 1, wherein the optical lens (100) further satisfies at least one of following relationships: $1.6 < SD 9 / Yc 9 < 1.9 ,$ $1.5 < SD 10 / Yc 10 < 1.7 ,$ $2.2 < SD 11 / Yc 11 < 2.5 ,$ $1.9 < SD 12 / Yc 12 < 2.1 ,$ $1.4 < SD 13 / Yc 13 < 5.4 ,$ and $1.9 < SD 14 / Yc 13 < 2.7 ;$ wherein, SD9 is half of a maximum effective aperture of the object side surface (S9) of the fifth lens (L5), SD10 is half of a maximum effective aperture of the image side surface (S10) of the fifth lens (L5), SD11 is half of a maximum effective aperture of the object side surface (S11) of the sixth lens (L6), SD12 is half of a maximum effective aperture of the image side surface (S12) of the sixth lens (L6), SD13 is half of a maximum effective aperture of the object side surface (S13) of the seventh lens (L7), SD14 is half of a maximum effective aperture of the image side surface (S14) of the seventh lens (L7), Yc9 is a vertical height from an off-axis (O1) vertex of the object side surface (S9) of the fifth lens (L5) to the optical axis (O1), Yc10 is a vertical height from an off-axis (O1) vertex of the image side surface (S10) of the fifth lens (L5) to the optical axis (O1), Yc11 is a vertical height from an off-axis (O1) vertex of the object side surface (S11) of the sixth lens (L6) to the optical axis (O1), Yc12 is a vertical height from an off-axis (O1) vertex of the image side surface (S12) of the sixth lens (L6) to the optical axis (O1), Yc13 is a vertical height from an off-axis (O1) vertex of the object side surface (S13) of the seventh lens (L7) to the optical axis (O1), and Yc14 is a vertical height from an off-axis (O1) vertex of the image side surface (S14) of the seventh lens (L7) to the optical axis (O1).

14. A camera module (200), **characterized by** comprising:
an image sensor (201); and
the optical lens (100) according to any one of claims 1 to 13;
wherein, the image sensor (201) is arranged on the image side of the optical lens (100).

15. An electronic device (300), **characterized by** comprising:
a housing (301); and
the camera module (200) according to claim 14,
wherein the camera module (200) is arranged in the housing (301).
